# EUROPÄISCHE PATENTSCHRIFT

(11) **EP 3 501 136 B1**
(45) Veröffentlichungstag und Bekanntmachung des Hinweises auf die Patenterteilung: **23.06.2021**
(21) Anmeldenummer: 17791957.8
(22) Anmeldetag: 10.10.2017
(51) Int. Cl.: G06F 21/64, H04L 29/06, H04L 9/06, H04L 9/32, H04W 12/065, H04W 12/106

(54) **VERFAHREN, SENDER UND EMPFÄNGER ZUM AUTHENTISIEREN UND ZUM INTEGRITÄTSSCHUTZ VON NACHRICHTENINHALTEN**
METHOD, TRANSMITTER, AND RECEIVER FOR AUTHENTICATING AND PROTECTING THE INTEGRITY OF MESSAGE CONTENTS
PROCÉDÉ, ÉMETTEUR ET RÉCEPTEUR PERMETTANT L'AUTHENTIFICATION ET LA PROTECTION D'INTÉGRITÉ DE CONTENUS DE MESSAGES

(30) Priorität: 13.10.2016 DE 102016219926
(43) Veröffentlichungstag der Anmeldung: 26.06.2019
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2017/075733
(87) Internationale Veröffentlichungsnummer: WO 2018/069271

(56) Entgegenhaltungen:
- EP-A1- 1 615 370
- WO-A1-94/21066
- DE-A1-102005 025 325
- DE-T2- 69 629 857
- US-A1- 2001 021 254
- US-A1- 2014 237 237

## Beschreibung

Die Erfindung bezieht sich auf ein Verfahren, einen Sender und einen Empfänger zum Authentisieren und zum Integritätsschutz von Nachrichteninhalten.
Eine Beacon stellt einen sich wiederholenden Nachrichteninhalt mittels Nachrichten über eine Funkschnittstelle wie Bluetooth Low Energy bereit (z. B. Beacon Message). Dies wird z. B. für Indoor-Lokalisierung oder für Werbehinweise verwendet. Der Beacon-Inhalt, z. B. der sich wiederholende Nachrichteinhalt, kann fest sein (z.B. Beacon-ID, Position, URL mit Hinweis zu weiteren Informationen) oder prinzipiell auch veränderliche Komponenten aufweisen (z. B. Uhrzeit, Statussignal einer Lichtsignalanlage, Temperaturwerte).

Aus dem Stand der Technik sind das Dokument US 2014/237237 A1, das Dokument US 2001/021254 A1, das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1 und das Dokument US 8 843 761 B2 bekannt.

Eine Aufgabe der vorliegenden Erfindung ist es, ein Verfahren und Geräte bereitzustellen, die eine Integrität und/oder eine Authentizität des sich wiederholenden Nachrichtinhalts gewährleisten.

Die Aufgabe wird durch die in den unabhängigen Ansprüchen angegebenen Merkmale gelöst. In den Unteransprüchen sind vorteilhafte Weiterbildungen der Erfindung dargestellt.
Gemäß einem ersten Aspekt betrifft die Erfindung ein Verfahren zum Bereitstellen von authentisierbaren Nachrichten mit den Verfahrensschritten:
- Bestimmen eines sich wiederholenden Nachrichteninhalts der Nachrichten;
- Berechnen von Teilauthentifizierungscodes für die Nachrichten anhand des sich wiederholenden Nachrichteninhalts, wobei ein erster Authentifizierungscode für zumindest einen Teil der Nachrichten aus zumindest einem Teil der Teilauthentifizierungscodes zum Authentisieren des sich wiederholenden Nachrichteninhalts berechenbar ist; und
- Bereitstellen der Nachrichten, wobei die Nachrichten den sich wiederholenden Nachrichteninhalt und jeweils mindestens einen der Teilauthentifizierungscodes umfassen.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und Teilaspekte der Erfindung implementiert oder realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren.

Unter einem "Authentifizierungscode" kann im Zusammenhang mit der Erfindung beispielsweise ein Nachrichtenauthentifizierungscode (engl. Message Authentication Code, MAC deutsch), Prüfsummen, kryptographische Prüfsummen oder eine Stream Cipher verstanden werden, der beispielsbeispielsweise über einen Nachrichteninhalt, insbesondere den sich wiederholenden Nachrichteninhalt, gebildet wird. Beispielsweise kann der Authentifizierungscode ein MAC oder ein HMAC (engl. Keyed-Hash Message Authentication Code) sein, der insbesondere mittels einer Funktion, vorzugsweise einer kryptographischen Funktion, beispielsweise einer Einwegfunktion, einer Hashfunktion oder einer kryptographischen Hashfunktion, berechnet wird. Bei dem Authentifizierungscode kann es sich beispielsweise auch um eine digitale Signatur handeln.

Unter einem "ersten Authentifizierungscode" kann im Zusammenhang mit der Erfindung beispielsweise ein erster Puffer bzw. ein zusammengesetzter Authentifizierungscode verstanden werden, der insbesondere einen oder mehrere Teilauthentifizierungscodes umfasst. Mit anderen Worten kann der erste Authentifizierungscode beispielsweise aus einem einzigen Teilauthentifizierungscode gebildet werden oder aus mehreren Teilauthentifizierungscodes zusammengesetzt werden.

Unter einem "dritten Authentifizierungscode" kann im Zusammenhang mit der Erfindung beispielsweise ein dritter Puffer bzw. ein zusammengesetzter Authentifizierungscode verstanden werden, der insbesondere einen oder mehrere lokale Teilauthentifizierungscodes umfasst. Mit anderen Worten kann der dritte Authentifizierungscode beispielsweise aus einem einzigen lokalen Teilauthentifizierungscode gebildet werden oder aus mehreren lokalen Teilauthentifizierungscodes zusammengesetzt werden.

Unter einem "Teilauthentifizierungscode" kann im Zusammenhang mit der Erfindung beispielsweise ein Teil oder Abschnitt eines Authentifizierungscodes verstanden werden. Beispielsweise kann ein Authentifizierungscode in eine Anzahl von Teilen oder Abschnitten zerlegt werden. Insbesondere kann ein Authentifizierungscode mit einer Länge 256 Bit in 16 Teile oder Abschnitte mit jeweils einer Länge von 16 Bit zerlegt werden. Teilauthentifizierungscodes können beispielsweise auch durch kurze Authentifizierungscodes, beispielsweise mit einer Länge von jeweils 16 Bit, gebildet werden, die insbesondere jeweils über unterschiedliche Abschnitte des sich wiederholenden Nachrichteninhalts gebildet werden. Ein langer Authentifizierungscode, beispielsweise mit einer Länge von 256 Bit, kann dann insbesondere durch ein Zusammensetzen der Teilauthentifizierungscodes zu dem langen Authentifizierungscode gebildet werden. Beispielsweise ist ein langer Authentifizierungscode, beispielsweise mit einer Länge 256 Bit dadurch berechenbar, dass dann beispielsweise 16 Teilauthentifizierungscodes zu einem 256 Bit langen Authentifizierungscode zusammengesetzt werden. Vorzugsweise umfassen die jeweiligen Nachrichten jeweils voneinander unterschiedliche Teilauthentifizierungscodes (also insbesondere Teilauthentifizierungscodes, die sich auf unterschiedliche Abschnitte des sich wiederholenden Nachrichteninhalts beziehen). Insbesondere können Nachrichten auch mehrere Teilauthentifizierungscodes umfassen. Insbesondere können die jeweiligen Nachrichten jeweils gleiche Teilauthentifizierungscodes, beispielsweise um Teilauthentifizierungscodes redundant zu übermitteln, umfassen. Insbesondere werden Teilauthentifizierungscodes, die beispielsweise durch einen Empfänger oder einen Authentisierenden des sich wiederholenden Nachrichteninhalts gebildet werden, beispielsweise als lokale Teilauthentifizierungscodes bezeichnet. Bei Teilauthentifizierungscodes können beispielsweise Teilprüfsummen sein bzw. als diese implementiert sein.

Unter einem "Korrelator" kann im Zusammenhang mit der Erfindung beispielsweise ein Gerät verstanden werden, das mittels der Kreuzkorrelation den Zeitversatz zwischen zwei Signalen genau bestimmt. Mögliche Ausprägungen sind beispielsweise Spezialcomputer, Analogschaltungen oder Computerprogramme. Die Signale können beispielsweise technisch codierte Funksignale sein. Sie können beispielsweise auch Radar-, Sonar- oder optische Signale sein.

Unter einem "wiederholenden Nachrichteninhalt" kann im Zusammenhang mit der Erfindung beispielsweise ein identischer Nachrichteninhalt, beispielsweise eine sich zyklisch wiederholende Spreizcodefolge, verstanden werden, der vorzugsweise wiederholt gesendet wird. Ein wiederholender Nachrichteninhalt kann beispielsweise aber auch eine durch einen Empfänger nachvollziehbare Änderung an dem Nachrichteninhalt sein. Dies kann beispielsweise ein Zähler sein, der insbesondere für gesendete Nachrichten inkrementiert wird, ein Datum, eine Uhrzeit oder ein anderweitig berechenbarer Wert. Es ist beispielsweise auch möglich, dass insbesondere der Nachrichteninhalt einer langsamen Änderungsfrequenz unterworfen ist. Hierbei ändert sich beispielsweise innerhalb eines bestimmten Zeitfensters eine bestimmte Anzahl an Bits des Nachrichteninhalts, vorzugsweise nur ein geringe Anzahl an Bits, wobei die geänderten Bits vorzugsweis durch einen Empfänger identifizierbar sind. Mit anderen Worten, kann beispielsweise unter einem sich "wiederholenden Nachrichteninhalt" auch ein im Wesentlichen identischer Nachrichteninhalt verstanden werden. Zudem kann beispielsweise der sich wiederholende Nachrichteinhalt zyklisch gesendet werden, insbesondere nach einem vorgegebenen Zeitschema. Insbesondere das Senden des sich wiederholende Nachrichteninhalts kann beispielsweise aber auch durch Aufforderungen oder Trigger gesteuert werden.

Unter einem "Bereitstellen" kann im Zusammenhang mit der Erfindung beispielsweise ein Ablegen einer Nachricht in einem Speicher bzw. Speichermodul verstanden werden. Unter einem "Bereitstellen" kann aber auch ein Versenden einer Nachricht, beispielsweise an einen Empfänger oder ein Authentisierungsgerät verstanden werden. Insbesondere kann beim Bereitstellen der Nachrichten mit dem sich wiederholenden Nachrichteninhalt, der jeweilige Teilauthentifizierungscode der jeweiligen Nachricht bzw. des sich wiederholenden Nachrichteninhalts beispielsweise durch ein Anhängen des jeweiligen Teilauthentifizierungscodes an die jeweilige Nachricht bzw. den sich wiederholenden Nachrichteninhalt bereitgestellt werden. Alternativ kann insbesondere der jeweilige Teilauthentifizierungscode einen Teil der jeweiligen Nachricht bzw. des sich wiederholenden Nachrichteninhalts ersetzen oder mittels der Exklusiv-Oder-Operation mit der jeweiligen Nachricht bzw. dem sich wiederholenden Nachrichteninhalt verknüpft werden. Es ist beispielsweise auch möglich, dass die Teilauthentifizierungscodes separat als eine eigene Nachricht versendet werden, aber insbesondere logisch einer jeweiligen Nachricht zugeordnet sind.

Unter einer "ausreichenden Übereinstimmung" kann im Zusammenhang mit der Erfindung beispielsweise eine wesentliche Übereinstimmung zwischen zwei Authentifizierungscodes verstanden werden. Dies liegt beispielsweise vor, wenn die zwei Authentifizierungscodes übereinstimmen. Eine ausreichende Übereinstimmung kann beispielsweise auch dann vorliegen, wenn geringe Unterschiede zwischen den beiden Authentifizierungscodes festgestellt wurden. Dies kann beispielsweise dann der Fall sein, wenn insbesondere eine bestimmte Anzahl der Teilauthentifizierungscodes, aus dem insbesondere einer der Authentifizierungscodes berechnet wird, beispielsweise fehlen, inkorrekt oder Abweichungen von einem korrekten Wert aufweisen. Eine ausreichende Übereinstimmung kann beispielsweise dann festgestellt werden, wenn ein bestimmter Schwellwert eingehalten wird.

Unter einer "Mindestlänge", "Länge" und dergleichen, insbesondere hinsichtlich von Daten, beispielsweise Nachrichten, Teilauthentifizierungscode, Authentifizierungscodes, sich wiederholende Nachrichten, kann im Zusammenhang mit der Erfindung beispielsweise die Länge in Bits, insbesondere von Daten, beispielsweise von Authentifizierungscodes oder einer Nachricht, verstanden werden.

Unter "Nachrichten", "Nachrichteninhalt" und dergleichen können im Zusammenhang mit der Erfindung beispielsweise Signale verstanden werden, die beispielsweise Nachrichten kodieren. Unter "Nachrichten", "Nachrichteninhalt" und dergleichen können beispielsweise auch Spreizcodefolgen, Daten, Nutzerdaten oder Datenstrukturen verstanden werden, in denen vorzugsweise Informationen abgelegt werden oder mit denen insbesondere Informationen übertragen werden. Insbesondere der Nachrichteninhalt bzw. der Inhalt der Nachrichten wiederholt sich bei mehreren Nachrichten, beispielsweise bei mindestens zwei Nachrichten, vorzugsweise bei mindestens 10 Nachrichten, insbesondere noch bevorzugter bei mindestens 20 Nachrichten.

Unter "Authentisieren von Nachrichten" und dergleichen, insbesondere im Zusammenhang mit dem sich wiederholenden Nachrichtinhalt, kann beispielsweise ein Feststellen der Authentizität und/oder der Integrität des sich wiederholenden Nachrichteninhalts bei einer ausreichenden Übereinstimmung des dritten Authentifizierungscodes mit dem ersten Authentifizierungscode verstanden werden. Auch kann insbesondere unter einem gültigen Authentifizierungscode/Teilauthentifizierungscode oder einer Gültigkeit eines Authentifizierungscodes/Teilauthentifizierungscodes beispielsweise das Feststellen einer Integrität und/oder einer Authentizität des sich wiederholenden Nachrichteninhalts oder das Feststellen einer Integrität und/oder einer Authentizität von Abschnitten des sich wiederholenden Nachrichteninhalts verstanden werden.

Unter einem "Bereitstellungsgerät" kann im Zusammenhang mit der Erfindung beispielsweise ein Sender oder ein Sendegerät verstanden werden, wobei es sich bei dem Bereitstellungsgerät beispielsweise um ein Bluetooth Low Energy Gerät, einen RFID-Sender, ein Kommunikationsmodul eines Satellitensystems, ein Sendemodul eines Satellitennavigationssystem, eine Mobilfunkbasisstation handeln kann. Insbesondere handelt es sich bei einem Bereitstellungsgerät um eine Vorrichtung oder um ein Gerät, das insbesondere nur über geringe Ressourcen zum Versenden von Nachrichten verfügt.

Unter einem "Authentisierungsgerät" kann im Zusammenhang mit der Erfindung beispielsweise ein Empfänger verstanden werden, wobei es sich bei dem Authentisierungsgerät insbesondere um einen Bluetooth Low Energy Empfänger, einen RFID-Empfänger oder ein Empfangsmodul für Signale eines Satellitennavigationssystems handeln kann. Insbesondere handelt es sich bei einem Authentisierungsgerät um eine Vorrichtung oder um ein Gerät, das vorzugsweise über mehr Ressourcen verfügt als der Sender.

Unter "Ressourcen" können im Zusammenhang mit der Erfindung beispielsweise eine zur Verfügung stehende Bandbreite zum Senden von Nachrichten, zur Verfügung stehende Energie zum Betreiben eines Senders oder eines Bereitstellungsgerätes oder zur Verfügung stehende Rechenkapazitäten eines Senders oder eines Bereitstellungsgerätes verstanden werden.

Unter "Rechenkapazitäten" können im Zusammenhang mit der Erfindung beispielsweise Taktrate oder Speicherkapazitäten, beispielsweise eines Prozessors, verstanden werden.

Unter "kryptographischer Schutz" können im Zusammenhang mit der Erfindung beispielsweise ein Schützen von Nachrichten bzw. eines sich wiederholenden Nachrichteninhalts der Nachrichten verstanden werden, indem beispielsweise eine Integrität und eine Authentizität des sich wiederholenden Nachrichtinhalts überprüfbar ist. Weiterhin kann beispielsweise unter "kryptographisch Schützen" verstanden werden, dass beispielsweise ein Replizieren eines gültigen sich wiederholenden Nachrichteninhalts an einem anderen Ort durch einen anderen Sender verhindert werden.

Es wird noch angemerkt, dass insbesondere durch den Ausdruck "Verfahrensschritte" und dergleichen keine chronologische Reihenfolge der Verfahrensschritte der erfindungsgemäßen Verfahren impliziert ist.

Das Verfahren ist beispielsweise dahingehend vorteilhaft, wenn ein Sender, der insbesondere über geringe Ressourcen zum Erzeugen und Versenden von Nachrichten verfügt, beispielsweise Nachrichten bzw. sich wiederholende Nachrichteninhalte der Nachrichten kryptographisch schützen möchte. Durch die Erfindung steigt insbesondere das Sicherheitsniveau von mehrfach ausgesendeten Nachrichten mit einem sich wiederholenden Nachrichteninhalt. Beispielsweise kann ein Empfänger entweder die Nachrichten sofort überprüfen, wobei hierbei insbesondere ein relativ schwaches Sicherheitsniveau erreicht wird. Das Verfahren ist insbesondere dahingehend vorteilhaft, da je mehr Nachrichten mit dem sich wiederholenden Nachrichteninhalt (und vorzugsweise unterschiedlichen Teilauthentifizierungscodes) empfangen werden, desto höher wird insbesondere das erreichte Sicherheitsniveau. Mit anderen Worten steigt beispielsweise das Sicherheitsniveau schrittweise mit der Anzahl der empfangenen Nachrichten, wobei die Nachrichten insbesondere jeweils mindestens einen Teilauthentifizierungscode umfassen.

Es können beispielsweise Teilauthentifizierungscodes in den einzelnen Nachrichten verwendet werden, deren Größe beispielsweise aus kryptographischer Sicht unzureichend wäre. Insbesondere wird aber ein höheres Sicherheitsniveau erreicht, indem beispielsweise mehrere Nachrichten und deren Teilauthentifizierungscodes vom Empfänger ausgewertet werden können. Durch eine Prüfung mehrerer Teilauthentifizierungscodes, insbesondere unterschiedlicher Teilauthentifizierungscodes, der Nachrichten kann beispielsweise ein vorgegebenes Sicherheitsniveau erreicht werden. Wird beispielsweise eine Länge von 128 Bit für einen Authentifizierungscode, beispielsweise für den ersten Authentifizierungscode, gefordert, so kann dieser beispielsweise aus unterschiedlichen Teilauthentifizierungscodes zusammengesetzt werden, die beispielsweise jeweils eine Länge von 8 Bit haben. Die Teilauthentifizierungscodes werden beispielsweise bei deren Berechnung jeweils über unterschiedliche Abschnitte des sich wiederholenden Nachrichteninhalts gebildet. Ein Empfänger berechnet dann vorzugsweise den Authentifizierungscode, beispielsweise den ersten Authentifizierungscode, anhand von jeweils unterschiedlichen Teilauthentifizierungscodes oder bildet lokale Teilauthentifizierungscodes für die jeweiligen Abschnitte des sich wiederholenden Nachrichteninhalts, die insbesondere jeweils mit den durch einen Sender bereitgestellten Teilauthentifizierungscodes geschützt sind.

Beispielsweise wird zum Berechnen der Teilauthentifizierungscodes der sich wiederholende Nachrichteninhalt in Abschnitte mit einer vorgegeben Länge unterteilt, beispielsweise 4 Bit, und es werden jeweils kurze Authentifizierungscodes, beispielsweise mit einer Länge von 8 Bit, über die jeweiligen Abschnitte berechnet, die dann beispielsweise als die Teilauthentifizierungscodes dienen können.

Die Nachrichten umfassen dann vorzugsweise jeweils unterschiedliche Teilauthentifizierungscodes, wobei beispielsweise mehrere Nachrichten jeweils einen gleichen Teilauthentifizierungscode umfassen können. Hierdurch kann beispielsweise bei einem Verlust von Nachrichten insbesondere der erste Authentifizierungscode trotz dieses Verlustes möglichst vollständig berechnet werden. Eine Nachricht kann insbesondere einen Teilauthentifizierungscode oder auch mehrere identische oder unterschiedliche Teilauthentifizierungscode umfassen. Darüber hinaus kann eine Nachricht beispielsweise noch weitere Daten enthalten, beispielsweise sich schnell ändernde Nutzerdaten.

Zusätzlich können die Nachrichten beispielsweise Datenfelder enthalten, die angeben, auf welchen Abschnitt des sich wiederholenden Nachrichteninhaltes der jeweiligen Nachricht sich insbesondere der jeweilige Teilauthentifizierungscode der jeweiligen Nachricht bezieht. Es können beispielsweise auch Datenfelder vorgesehen sein, die angeben wie groß der jeweilige Teilauthentifizierungscode ist, z. B. 8 Bit oder 4 Bit. Alternativ können beispielsweise eine Zuordnung der jeweiligen Teilauthentifizierungscodes zu den jeweiligen Abschnitten des sich wiederholenden Nachrichteninhaltes durch die Bereitstellungsreihenfolge oder Empfangsreihenfolge bestimmt werden.

Bei einer ersten Ausführungsform des Verfahrens werden die die Teilauthentifizierungscode anhand eines zweiten Authentifizierungscodes berechnet und der zweite Authentifizierungscode wird anhand des sich wiederholenden Nachrichteninhalts berechnet.

Das Verfahren ist beispielsweise dahingehend vorteilhaft, um auf einfache Weise Teilauthentifizierungscodes zu bilden, die insbesondere vorgegebenen Sicherheitsrichtlinien entsprechen. Dies kann beispielsweise eine vorgegebene Länge des ersten bzw. zweiten Authentifizierungscodes sein oder es kann beispielsweise ein bestimmtes Verfahren oder ein bestimmter Algorithmus zur Erstellung der Teilauthentifizierungscodes und/oder des erste Authentifizierungscodes und/oder des zweiten Authentifizierungscodes vorgegeben bzw. gefordert werden. Die Teilauthentifizierungscodes und/oder der erste Authentifizierungscode und/oder der zweiten Authentifizierungscode werden dabei vorzugsweise von einer kryptographischen Funktion, beispielsweise einer Hashfunktion oder einer Einwegfunktion, erzeugt. Beispielsweise wird zum Berechnen der Teilauthentifizierungscodes und/oder des zweiten Authentifizierungscodes der sich wiederholende Nachrichteninhalt in Abschnitte mit einer vorgegeben Länge unterteilt, beispielsweise in 4 Bit Abschnitte, und es werden jeweils kurze Authentifizierungscodes, beispielsweise mit einer Länge von 8 Bit, über die jeweiligen Abschnitte berechnet, die dann beispielsweise als die Teilauthentifizierungscodes dienen können. Es ist beispielsweise aber auch denkbar, dass der zweite Authentifizierungscode über den sich wiederholenden Nachrichteninhalt gebildet wird und dann in Abschnitte zerlegt wird, die dann als Teilauthentifizierungscodes dienen.

Bei weiteren Ausführungsformen des Verfahrens wird eine erste Länge der jeweiligen Teilauthentifizierungscodes für die jeweiligen Nachrichten festgelegt.

Das Verfahren ist beispielsweise dahingehend vorteilhaft, wenn beispielsweise bei einem Sender die Ressourcen zum Erstellen der Nachricht, der Teilauthentifizierungscodes oder zum Senden/Bereitstellen der Nachrichten zur Verfügung stehen, sich ändern. Einem Sender, der beispielsweise mittels einer Batterie und Solarzellen betrieben wird, stehen beispielsweise viele Ressourcen zur Verfügung, wenn insbesondere die Solarzellen gerade dem Sonnenlicht ausgesetzt sind. In dieser Situation ist es beispielsweise möglich einen Sender mit mehr Energie zu versorgen, sodass dieser auch längere Nachrichten bzw. länge Teilauthentifizierungscodes versenden kann. Der Sender kann dann beispielsweise einem Empfänger eine Veränderung der Länge der Teilauthentifizierungscodes beispielsweise über ein vordefiniertes Datenfeld in der Nachricht mitteilen.

Bei weiteren Ausführungsformen des Verfahrens wird eine vorgegebene Mindestlänge des ersten Authentifizierungscodes durch eine erste Anzahl der Nachrichten festgelegt.

Das Verfahren ist beispielsweise dahingehend vorteilhaft, um beispielsweise eine geforderte Mindestlänge des ersten Authentifizierungscodes zu erreichen. Diese Mindestlänge kann beispielsweise angeben, dass der erste Authentifizierungscode zumindest diese Länge aufweisen sollte, um insbesondere durch einen Sender akzeptiert zu werden. Ist beispielsweise die geforderte Mindestlänge des ersten Authentifizierungscodes 128 Bit, beispielsweise um ein vorgegebenes Sicherheitsniveau zu erreichen, so sind beispielsweise 8 unterschiedliche Teilauthentifizierungscodes mit jeweils einer Länge von 16 Bit notwendig, um aus diesen insbesondere den ersten Authentifizierungscode zu berechnen.

Bei weiteren Ausführungsformen des Verfahrens wird eine Authentizität und/oder eine Integrität des sich wiederholenden Nachrichteninhalts der Nachrichten anhand einer zweiten Anzahl der Nachrichten und deren jeweiligen Teilauthentifizierungscode festgestellt.

Das Verfahren ist beispielsweise dahingehend vorteilhaft, um die Teilauthentifizierungscodes möglichst flexibel zu erstellen und beispielsweise möglichst flexibel den ersten Authentifizierungscodes aus diesen zu berechnen. Hierzu wird insbesondere anhand der Teilauthentifizierungscodes und der zweiten Anzahl der Nachrichten der erste Authentifizierungscode berechnet, um beispielsweise die Authentizität und/oder die Integrität des sich wiederholenden Nachrichteninhaltes festzustellen. Hierdurch können beispielsweise unterschiedliche Situationen, beispielsweise ein Versenden der Nachrichten über ein vertrauenswürdiges Netzwerk oder ein nicht-vertrauenswürdiges Netzwerk, für die jeweils unterschiedliche Sicherheitsrichtlinien bzw. Sicherheitsniveaus gefordert sind, mittels des Verfahrens erfüllt werden. Dies erfolgt beispielsweise dadurch, indem insbesondere unterschiedliche Sicherheitsanforderungen/Sicherheitsniveaus der jeweiligen Sicherheitsrichtlinie, beispielsweise durch die Anzahl und/oder Länge der Teilauthentifizierungscodes oder Authentifizierungscodes erreicht werden, wobei sich das Sicherheitsniveau insbesondere durch die Anzahl der empfangenen Nachrichten erhöht. Die Authentizität und/oder die Integrität des sich wiederholenden Nachrichteninhalts kann somit insbesondere anhand der zweiten Anzahl von Teilauthentifizierungscodes, die beispielsweise durch einen Empfänger empfangen wurden, festgestellt werden. Insbesondere ist es auch möglich, dass die erste Anzahl beispielsweise der zweiten Anzahl entspricht oder umgekehrt.

Insbesondere handelt es sich bei der zweiten Anzahl von Nachrichten vorzugsweise um Nachrichten mit jeweils unterschiedlichen Teilauthentifizierungscodes.

Es ist beispielsweise aber auch möglich, dass die Authentizität und/oder die Integrität des sich wiederholenden Nachrichteninhalts insbesondere anhand einer dritten Anzahl von Teilauthentifizierungscodes festgestellt wird, wobei die dritte Anzahl vorzugsweise innerhalb eines vorgegebenen Zeitintervalls übertragen wird.

Insbesondere handelt es sich bei der dritten Anzahl von Nachrichten vorzugsweise um Nachrichten mit jeweils unterschiedlichen Teilauthentifizierungscodes.

Die Authentizität und/oder die Integrität werden beispielsweise durch einen Empfänger dadurch festgestellt, indem dieser insbesondere einen dritten Authentifizierungscode über den sich wiederholenden Nachrichteninhalt bildet. Insbesondere wird dieser dritte Authentifizierungscode mit dem ersten Authentifizierungscode vergleichen und bei einer ausreichenden Übereinstimmung dieser beiden Authentifizierungscodes die Authentizität und/oder die Integrität des sich wiederholenden Nachrichteninhalts festgestellt.

Bei weiteren Ausführungsformen des Verfahrens ist der erste Authentifizierungscode und/oder der zweite Authentifizierungscode ein Nachrichtenauthentifizierungscode und/oder ein Stream Cipher.

Das Verfahren ist beispielsweise dahingehend vorteilhaft, um die Authentifizierungscodes auf möglichst einfache Weise zu erstellen. Insbesondere kann beispielsweise der Nachrichtenauthentifizierungscode aus mehreren weiteren Nachrichtenauthentifizierungscodes zusammengesetzt sein, wobei insbesondere die weiteren Nachrichtenauthentifizierungscodes die Teilauthentifizierungscodes sind.

Bei weiteren Ausführungsformen des Verfahrens sind die Teilauthentifizierungscodes Abschnitte des zweiten Authentifizierungscodes und/oder die Teilauthentifizierungscodes sind Abschnitte des Stream Ciphers oder eines Stream Ciphers.

Das Verfahren ist beispielsweise dahingehend vorteilhaft, um insbesondere auf möglichst einfache Weise Teilauthentifizierungscodes für jeweils unterschiedliche Abschnitte des sich wiederholenden Nachrichteninhalts zu berechnen.

Gemäß einem zweiten Aspekt betrifft die Erfindung ein Verfahren zum Authentisieren von authentisierbaren Nachrichten mit den Verfahrensschritten:
- Bestimmen eines sich wiederholenden Nachrichteninhalts der Nachrichten;
- Ermitteln von Teilauthentifizierungscodes der Nachrichten für den sich wiederholenden Nachrichteninhalt;
- Berechnen von lokalen Teilauthentifizierungscodes für die Nachrichten anhand des sich wiederholenden Nachrichteninhalts;
- Vergleichen der Teilauthentifizierungscodes mit den entsprechenden lokalen Teilauthentifizierungscodes;
- Feststellen einer Authentizität und/oder einer Integrität des sich wiederholenden Nachrichteninhalts bei einer ausreichenden Übereinstimmung der Teilauthentifizierungscodes mit den entsprechenden lokalen Teilauthentifizierungscodes.

Das Verfahren ist beispielsweise dahingehend vorteilhaft, um insbesondere Nachrichten bzw. sich wiederholende Nachrichteninhalte der Nachrichten eines Senders, der insbesondere über geringe Ressourcen zum Erzeugen und Versenden der Nachrichten verfügt, durch einen Empfänger auf deren Authentizität und Integrität zu prüfen. Durch die Erfindung steigt insbesondere das Sicherheitsniveau von mehrfach ausgesendeten Nachrichten mit einem sich wiederholenden Nachrichteninhalt. Beispielsweise kann ein Empfänger entweder die Nachrichten sofort überprüfen, wobei hierbei insbesondere ein relativ schwaches Sicherheitsniveau erreicht wird. Das Verfahren ist insbesondere dahingehend vorteilhaft, da je mehr Nachrichten mit dem sich wiederholenden Nachrichteninhalt (und vorzugsweise unterschiedlichen Teilauthentifizierungscodes) empfangen werden, desto höher wird damit insbesondere das erreichte Sicherheitsniveau. Mit anderen Worten steigt beispielsweise das Sicherheitsniveau schrittweise mit der Anzahl der empfangenen Nachrichten, wobei die Nachrichten insbesondere jeweils mindestens einen Teilauthentifizierungscode umfassen.

Es können beispielsweise Teilauthentifizierungscodes in den einzelnen Nachrichten verwendet werden, deren Größe beispielsweise aus kryptographischer Sicht unzureichend wäre. Insbesondere wird aber ein höheres Sicherheitsniveau erreicht, indem beispielsweise mehrere Nachrichten und insbesondere deren Teilauthentifizierungscodes vom Empfänger ausgewertet werden können. Durch eine Prüfung mehrerer Teilauthentifizierungscodes der Nachrichten kann beispielsweise ein vorgegebenes Sicherheitsniveau erreicht werden. Wird beispielsweise eine Länge von 128 Bit für einen Authentifizierungscode, beispielsweise für den ersten Authentifizierungscode, gefordert, so kann dieser beispielsweise aus unterschiedlichen Teilauthentifizierungscodes zusammengesetzt werden, die beispielsweise jeweils eine Länge von 8 Bit haben. Die Teilauthentifizierungscodes werden beispielsweise bei deren Berechnung jeweils über unterschiedliche Abschnitte des sich wiederholenden Nachrichteninhalts gebildet. Ein Empfänger berechnet dann vorzugsweise den Authentifizierungscode für den sich wiederholenden Nachrichteninhalt, beispielsweise den ersten Authentifizierungscode, anhand von jeweils unterschiedlichen Teilauthentifizierungscodes und/oder bildet lokale Teilauthentifizierungscodes für die jeweiligen Abschnitte des sich wiederholenden Nachrichteninhalts, die insbesondere jeweils mit den durch den Sender bereitgestellten Teilauthentifizierungscodes geschützt sind.

Die lokalen Teilauthentifizierungscodes werden insbesondere anlog zu den durch den Sender in den Nachrichten bereitgestellten Teilauthentifizierungscode berechnet. Beispielsweise wird zum Berechnen der lokalen Teilauthentifizierungscodes der sich wiederholende Nachrichteninhalt in Abschnitte mit einer vorgegeben Länge unterteilt, beispielsweise 4 Bit, und es werden jeweils kurze Authentifizierungscodes, beispielsweise mit einer Länge von 8 Bit, über die jeweiligen Abschnitte berechnet, die dann beispielsweise als die lokalen Teilauthentifizierungscodes dienen können.

Die vom Sender bereitgestellten Nachrichten umfassen dann vorzugsweise jeweils unterschiedliche Teilauthentifizierungscodes, wobei beispielsweise mehrere Nachrichten jeweils einen gleichen Teilauthentifizierungscode umfassen können. Hierdurch kann beispielsweise bei einem Verlust von Nachrichten, insbesondere der erste Authentifizierungscode, trotz dieses Verlustes möglichst vollständig berechnet werden. Eine Nachricht kann insbesondere einen Teilauthentifizierungscode oder auch mehrere identische oder unterschiedliche Teilauthentifizierungscodes umfassen. Darüber hinaus kann eine Nachricht beispielsweise noch weitere Daten enthalten, beispielsweise sich schnell ändernde Nutzerdaten.

Mittels des erfindungsgemäßen Verfahrens können beispielsweise unterschiedliche Situationen, insbesondere ein Versenden der Nachrichten über ein vertrauenswürdiges Netzwerk oder ein nicht-vertrauenswürdiges Netzwerk, für die jeweils unterschiedliche Sicherheitsrichtlinien gefordert sind, erfüllt werden. Dies erfolgt beispielsweise dadurch, indem beispielsweise unterschiedliche Sicherheitsanforderungen der jeweiligen Sicherheitsrichtlinie, beispielsweise durch die Anzahl und/oder Länge der Teilauthentifizierungscodes oder Authentifizierungscodes erreicht werden, wobei sich das Sicherheitsniveau insbesondere durch die Anzahl der empfangenen Nachrichten erhöht. Die Authentizität und/oder die Integrität des sich wiederholenden Nachrichteninhalts kann somit insbesondere anhand der zweiten Anzahl von Teilauthentifizierungscodes, die beispielsweise durch einen Empfänger empfangen wurden, festgestellt werden.

Insbesondere handelt es sich bei der zweiten Anzahl von Nachrichten vorzugsweise um Nachrichten mit jeweils unterschiedlichen Teilauthentifizierungscodes.

Es ist beispielsweise aber auch möglich, dass die Authentizität und/oder die Integrität des sich wiederholenden Nachrichteninhalts, insbesondere anhand einer dritten Anzahl von Teilauthentifizierungscodes, festgestellt wird, wobei die dritte Anzahl vorzugsweise innerhalb eines vorgegebenen Zeitintervalls übertragen wird.

Insbesondere handelt es sich bei der dritten Anzahl von Nachrichten vorzugsweise um Nachrichten mit jeweils unterschiedlichen Teilauthentifizierungscodes.

Die Authentizität und/oder die Integrität werden beispielsweise durch einen Empfänger dadurch festgestellt, dass dieser insbesondere einen dritten Authentifizierungscode über den sich wiederholenden Nachrichteninhalt bildet. Insbesondere wird dieser dritte Authentifizierungscode mit dem ersten Authentifizierungscode verglichen und bei einer ausreichenden Übereinstimmung dieser beiden Authentifizierungscodes die Authentizität und/oder die Integrität des sich wiederholenden Nachrichteninhalts festgestellt. Der dritte Authentifizierungscode kann beispielsweise aus den lokalen Teilauthentifizierungscodes insbesondere durch einen Empfänger gebildet werden.

Zusätzlich können die Nachrichten beispielsweise Datenfelder enthalten, die angeben, auf welchen Abschnitt des sich wiederholenden Nachrichteninhaltes der jeweiligen Nachricht sich insbesondere der jeweilige Teilauthentifizierungscode der jeweiligen Nachricht bezieht. Es können beispielsweise auch Datenfelder vorgesehen sein, die angeben wie groß der jeweilige Teilauthentifizierungscode ist, z. B. 8 Bit oder 4 Bit. Alternativ können beispielsweise eine Zuordnung der jeweiligen Teilauthentifizierungscodes zu den jeweiligen Abschnitten des sich wiederholenden Nachrichteninhaltes durch die Bereitstellungsreihenfolge oder Empfangsreihenfolge bestimmt werden.

Bei weiteren Ausführungsformen des Verfahrens wird
- ein erster Authentifizierungscode aus zumindest einem Teil der Teilauthentifizierungscodes für den sich wiederholenden Nachrichteninhalt berechnet;
- ein dritter Authentifizierungscodes für den sich wiederholenden Nachrichteninhalt oder aus zumindest einem Teil der lokalen Teilauthentifizierungscodes für den sich wiederholenden Nachrichteninhalt berechnet;
- beim Vergleichen der erste Authentifizierungscode mit dem dritten Authentifizierungscode verglichen und eine Authentizität und/oder einer Integrität des sich wiederholenden Nachrichteninhalts wird bei einer ausreichenden Übereinstimmung des dritten Authentifizierungscodes mit dem ersten Authentifizierungscode festgestellt.

Bei weiteren Ausführungsformen des Verfahrens werden die Teilauthentifizierungscode anhand eines zweiten Authentifizierungscodes berechnet und der zweite Authentifizierungscode wird anhand des sich wiederholenden Nachrichteninhalts berechnet.

Bei weiteren Ausführungsformen des Verfahrens wird eine erste Länge der jeweiligen Teilauthentifizierungscodes für die jeweiligen Nachrichten festgelegt.

Bei weiteren Ausführungsformen des Verfahrens wird eine vorgegebene Mindestlänge des ersten Authentifizierungscodes durch eine erste Anzahl der Nachrichten festgelegt.

Bei weiteren Ausführungsformen des Verfahrens ist der erste Authentifizierungscode und/oder der zweite Authentifizierungscode und/oder der dritte Authentifizierungscode ein Nachrichtenauthentifizierungscode und/oder ein Stream Cipher.

Das Verfahren ist beispielsweise dahingehend vorteilhaft, um die Authentifizierungscodes auf möglichst einfache Weise zu erstellen. Insbesondere kann beispielsweise der Nachrichtenauthentifizierungscode aus mehreren weiteren Nachrichtenauthentifizierungscodes zusammengesetzt sein, wobei insbesondere die weiteren Nachrichtenauthentifizierungscodes die Teilauthentifizierungscodes sind.

Gemäß einem dritten Aspekt betrifft die Erfindung ein Bereitstellungsgerät zum Bereitstellen von authentisierbaren Nachrichten, aufweisend:
- ein erstes Berechnungsmodul zum Bestimmen eines sich wiederholenden Nachrichteninhalts der Nachrichten;
- ein zweites Berechnungsmodul zum Berechnen von Teilauthentifizierungscodes für die Nachrichten anhand des sich wiederholenden Nachrichteninhalts, wobei ein erster Authentifizierungscode für zumindest einen Teil der Nachrichten aus zumindest einem Teil der Teilauthentifizierungscodes zum Authentisieren des sich wiederholenden Nachrichteninhalts berechenbar ist; und
- ein erstes Bereitstellungsmodul zum Bereitstellen der Nachrichten, wobei die Nachrichten den sich wiederholenden Nachrichteninhalt und jeweils mindestens einen der Teilauthentifizierungscode umfassen.

Bei einer weiteren Ausführungsform des Bereitstellungsgeräts umfasst das Bereitstellungsgerät zumindest ein weiteres Modul oder mehrere weitere Module zur Durchführung des erfindungsgemäßen Verfahrens, das authentisierbare Nachrichten bereitstellt.

Gemäß einem vierten Aspekt betrifft die Erfindung ein Authentisierungsgerät zum Authentisieren von authentisierbaren Nachrichten, aufweisend:
- ein drittes Berechnungsmodul zum Bestimmen eines sich wiederholenden Nachrichteninhalts der Nachrichten;
- ein viertes Berechnungsmodul zum Ermitteln von Teilauthentifizierungscodes der Nachrichten für den sich wiederholenden Nachrichteninhalt;
- ein fünftes Berechnungsmodul zum Berechnen von lokalen Teilauthentifizierungscodes für die Nachrichten anhand des sich wiederholenden Nachrichteninhalts;
- ein erstes Vergleichsmodul zum Vergleichen der Teilauthentifizierungscodes mit den entsprechenden lokalen Teilauthentifizierungscodes;
- ein erstes Feststellungsmodul zum Feststellen einer Authentizität und/oder einer Integrität des sich wiederholenden Nachrichteninhalts bei einer ausreichenden Übereinstimmung der Teilauthentifizierungscodes mit den entsprechenden lokalen Teilauthentifizierungscodes.

Bei einer weiteren Ausführungsform des Authentisierungsgeräts umfasst das Authentisierungsgerät zumindest ein weiteres Modul oder mehrere weitere Module zur Durchführung des erfindungsgemäßen Verfahrens, das authentisierbare Nachrichten authentisiert.

Gemäß einem fünften Aspekt betrifft die Erfindung ein System zum Austausch von authentisierbaren Nachrichten, aufweisend:
- mindestens ein erfindungsgemäßes Bereitstellungsgerät;
- mindestens ein erfindungsgemäßes Authentisierungsgerät.

Bei einer weiteren Ausführungsform des Systems umfasst das System zumindest ein weiteres Modul oder mehrere weitere Module zur Durchführung der erfindungsgemäßen Verfahren. Das System kann beispielsweise ein Kommunikationsnetzwerk umfassen, mittels dem das mindestens eine Bereitstellungsgerät und das mindestens eine Authentisierungsgerät über ein Kommunikationsnetzwerk miteinander kommunikativ verbunden sind.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Bereitstellungsgerät und/oder das genannte erfindungsgemäße Authentisierungsgerät und/oder das genannte erfindungsgemäße System erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das genannte erfindungsgemäße Bereitstellungsgerät und/oder das genannte erfindungsgemäße Authentisierungsgerät und/oder das genannte erfindungsgemäße System erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm des erfindungsgemäßen Verfahrens zum Bereitstellen von authentisierbaren Nachrichten;
- Fig. 2: ein zweites Ausführungsbeispiel der Erfindung als ein Ablaufdiagramm des erfindungsgemäßen Verfahrens zum Bereitstellen von authentisierbaren Nachrichten;
- Fig. 3: ein drittes Ausführungsbeispiel der Erfindung als ein Bereitstellungsgerät;
- Fig. 4: ein viertes Ausführungsbeispiel der Erfindung als ein Authentisierungsgerät;
- Fig. 5: ein fünftes Ausführungsbeispiel der Erfindung als ein System; und
- Fig. 6-8: ein sechstes Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinrichtung auf, um das Verfahren zu implementieren oder auszuführen.

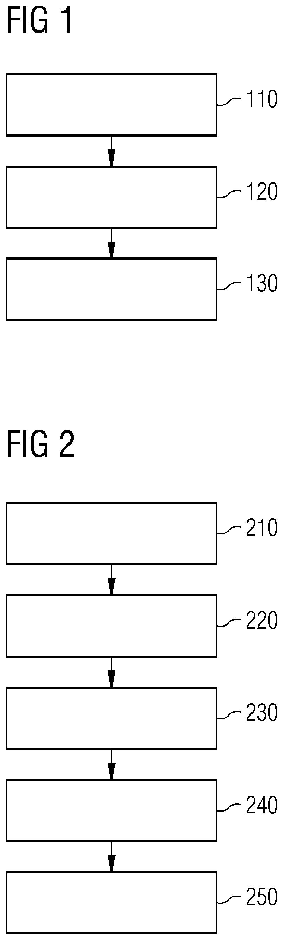

Die Fig. 1 zeigt ein erstes Ausführungsbeispiel der Erfindung als ein Ablaufdiagramm des erfindungsgemäßen Verfahrens zum Bereitstellen von authentisierbaren Nachrichten. Das Verfahren wird insbesondere durch einen Sender ausgeführt bzw. implementiert.

Das Verfahren ist vorzugsweise rechnergestützt und wird insbesondere durch den Sender implementiert bzw. realisiert.

Das Verfahren umfasst einen ersten Verfahrensschritt 110 zum Bestimmen eines sich wiederholenden Nachrichteninhalts der Nachrichten.

Ein sich wiederholender Nachrichteninhalt kann entweder ein über mehrere Nachrichten hinweg identischer Inhalt sein oder beispielsweise eine durch einen Empfänger nachvollziehbare Änderung an dem Nachrichteninhalt sein. Dies kann beispielsweise ein Zähler sein, der insbesondere für gesendete Nachrichten inkrementiert wird, ein Datum, eine Uhrzeit oder ein anderweitig berechenbarer Wert sein. Es ist beispielsweise auch möglich, dass insbesondere der Nachrichteninhalt einer langsamen Änderungsfrequenz unterworfen ist. Hierbei ändern sich beispielsweise innerhalb eines bestimmten Zeitfensters eine bestimmte Anzahl an Bits des Nachrichteninhalts, vorzugsweise nur ein geringe Anzahl an Bits, wobei die geänderten Bits vorzugsweise durch einen Empfänger identifizierbar sind.

Das Verfahren umfasst einen zweiten Verfahrensschritt 120 zum Berechnen von Teilauthentifizierungscodes für die Nachrichten anhand des sich wiederholenden Nachrichteninhalts, wobei ein erster Authentifizierungscode für zumindest einen Teil der Nachrichten aus zumindest einem Teil der Teilauthentifizierungscode zum Authentisieren des sich wiederholenden Nachrichteninhalts berechenbar ist.

Die Teilauthentifizierungscodes können beispielsweise über vorgegebene Abschnitte des sich wiederholenden Nachrichteninhalts gebildet werden. Eine Information über diese vorgegebenen Abschnitte kann beispielsweise die jeweilige Nachricht aufweisen, die den jeweiligen Teilauthentifizierungscode umfasst, der über den jeweiligen vorgegebenen Abschnitt gebildet wurde. Bei einem vorgegebenen Abschnitt kann es sich beispielsweise um mehrere Bits des sich wiederholenden Nachrichteninhalts handeln. Bei dem vorgegebene Abschnitt es sich somit insbesondere um die Bits 8-16 des sich wiederholenden Nachrichteninhaltshandeln.

Zur Berechnung der Teilauthentifizierungscodes kann beispielsweise eine kryptographische Funktion verwendet werden, die beispielsweise mittels eines (kryptographischen) Schlüssels die Teilauthentifizierungscodes berechnet. Der kryptographische Schlüssel bildet vorzugsweise ein Geheimnis zwischen einem Sender, der die Nachrichten bzw. Teilauthentifizierungscodes sendet, und einem Empfänger der die Nachrichten bzw. die Teilauthentifizierungscodes authentisiert bzw. deren Korrektheit feststellt. Die kryptographische Funktion ist vorzugsweise ebenfalls dem Sender und dem Empfänger bekannt. Die kryptographische Funktion und/oder der (kryptographischen) Schlüssel können beispielsweise auch zum Berechnen eines zweiten Authentifizierungscodes über den sich wiederholenden Nachrichteninhalt verwendet werden, der in einigen Ausführungsbeispielen beispielsweise als Grundlage für die Teilauthentifizierungscodes dient.

Das Verfahren umfasst einen dritten Verfahrensschritt 130 zum Bereitstellen der Nachrichten, wobei die Nachrichten den sich wiederholenden Nachrichteninhalt und jeweils mindestens einen der Teilauthentifizierungscode umfassen.

Die Nachrichten können beispielsweise durch einen Sender, beispielsweise ein Bereitstellungsgerät, einem Empfänger, beispielsweise ein Authentisierungsgerät, dadurch bereitgestellt werden, indem die Nachrichten über ein Kommunikationsnetzwerk an den Empfänger gesendet werden.

Hierzu kann beispielsweise der sich wiederholende Nachrichteinhalt zyklisch gesendet werden, insbesondere nach einem vorgegebenen Zeitschema. Insbesondere kann das Senden des sich wiederholende Nachrichteninhalts beispielsweise aber auch durch Aufforderungen oder einen Trigger gesteuert werden.

Die Fig. 2 zeigt ein zweites Ausführungsbeispiel der Erfindung als ein Ablaufdiagramm des erfindungsgemäßen Verfahrens zum Bereitstellen von authentisierbaren Nachrichten. Das Verfahren wird insbesondere durch einen Empfänger ausgeführt bzw. implementiert.

Das Verfahren ist vorzugsweise rechnergestützt und wird insbesondere durch den Empfänger implementiert.

Das Verfahren umfasst einen ersten Verfahrensschritt 210 zum Bestimmen eines sich wiederholenden Nachrichteninhalts der Nachrichten.

Das Verfahren umfasst einen zweiten Verfahrensschritt 220 zum Ermitteln von Teilauthentifizierungscodes der Nachrichten für den sich wiederholenden Nachrichteninhalt.

Hierbei können beispielsweise die Nachrichten ein Datenfeld enthalten, das den Ort und die Länge des jeweiligen Teilauthentifizierungscodes angibt. Es ist aber auch möglich, dass das Format der Nachrichten und/oder der Teilauthentifizierungscodes fest vorgegeben ist. Beispielsweise sind die Bits 1-20 für Nutzdaten oder Nutzerdaten vorgesehen, die beispielsweise den sich wiederholenden Nachrichteninhalt umfassen. Die Bits 21-36 können dann beispielsweise für Teilauthentifizierungscodes benutzt werden.

Das Verfahren umfasst einen dritten Verfahrensschritt 230 zum Berechnen von lokalen Teilauthentifizierungscodes für die Nachrichten anhand des sich wiederholenden Nachrichteninhalts. Die lokalen Teilauthentifizierungscodes werden vorzugsweise über die gleichen Abschnitte des sich wiederholenden Nachrichteninhalts gebildet wie die Teilauthentifizierungscodes, die beispielsweise beim Bereitstellen der Nachrichten gebildet wurden bzw. durch den Sender gebildet wurden. Damit die lokalen Teilauthentifizierungscodes über den gleichen Abschnitt des sich wiederholenden Nachrichteninhalts gebildet werden können wie die entsprechenden durch den Sender gebildeten Teilauthentifizierungscodes, können die Nachrichten beispielsweise jeweils eine Information enthalten, die angeben, auf welchen Abschnitt des sich wiederholenden Nachrichteninhalts sich ein Teilauthentifizierungscode bezieht.

Das Verfahren umfasst einen vierten Verfahrensschritt 240 zum Vergleichen der Teilauthentifizierungscodes mit den entsprechenden lokalen Teilauthentifizierungscodes.

Zur Berechnung der lokalen Teilauthentifizierungscodes kann beispielsweise eine kryptographische Funktion verwendet werden, die beispielsweise mittels eines (kryptographischen) Schlüssels die Teilauthentifizierungscodes berechnet. Der kryptographische Schlüssel bildet vorzugsweise ein Geheimnis zwischen einem Sender, der die Nachrichten bzw. Teilauthentifizierungscodes sendet, und einem Empfänger der die Nachrichten bzw. die Teilauthentifizierungscodes authentisiert bzw. deren Korrektheit feststellt (Feststellen einer Authentizität und/oder einer Integrität). Die kryptographische Funktion ist vorzugsweise ebenfalls dem Sender und dem Empfänger bekannt. Die kryptographische Funktion und/oder der (kryptographischen) Schlüssel können beispielsweise auch zum Berechnen eines dritten Authentifizierungscodes über den sich wiederholenden Nachrichteninhalt verwendet werden, der in einigen Ausführungsbeispielen beispielsweise als Grundlage für die Teilauthentifizierungscodes dient.

Die lokalen Teilauthentifizierungscodes werden insbesondere über die gleichen Abschnitte des sich wiederholenden Nachrichteninhalts gebildet, wie die Teilauthentifizierungscodes die beispielsweise durch den Sender über diese Abschnitte gebildet wurden.

Das Verfahren umfasst einen fünften Verfahrensschritt 250 zum Feststellen einer Authentizität und/oder einer Integrität des sich wiederholenden Nachrichteninhalts bei einer ausreichenden Übereinstimmung der Teilauthentifizierungscodes mit den entsprechenden lokalen Teilauthentifizierungscodes.

Mit anderen Worten werden jeweils Teilauthentifizierungscodes, also lokale Teilauthentifizierungscodes und vom Sender gebildete Teilauthentifizierungscodes, miteinander verglichen, die sich auf denselben Abschnitt des sich wiederholenden Nachrichteninhalts beziehen. Insofern können unter entsprechenden lokalen Teilauthentifizierungscodes beispielsweise lokale Teilauthentifizierungscodes verstanden werden, die über den gleichen Abschnitt des sich wiederholenden Nachrichteninhalts gebildet werden wie die Teilauthentifizierungscodes, die durch den Sender für diesen Abschnitt des sich wiederholenden Nachrichteninhalts gebildet wurden.

In einer weiteren Variante des Verfahrens wird ein erster Authentifizierungscode aus zumindest einem Teil der Teilauthentifizierungscodes für den sich wiederholenden Nachrichteninhalt berechnet. Mit anderen Worten wird insbesondere aus den Teilauthentifizierungscodes, die beispielsweise durch einen Sender zusammen mit den Nachrichten an einen Empfänger übertragen wurden, der erste Authentifizierungscode berechnet. Es wird dann insbesondere durch den Empfänger beispielsweise ein dritter Authentifizierungscode für den sich wiederholenden Nachrichteninhalt berechnet. Alternativ oder zusätzlich kann insbesondere durch den Empfänger beispielsweise der dritte Authentifizierungscode aus zumindest einem Teil der lokalen Teilauthentifizierungscodes für den sich wiederholenden Nachrichteninhalt berechnet werden. Insbesondere wird beim Vergleichen (also beim vierten Verfahrensschritt 240 und/oder beim fünften Verfahrensschritt 250) der erste Authentifizierungscode mit dem dritten Authentifizierungscode verglichen und es wird insbesondere eine Authentizität und/oder einer Integrität des sich wiederholenden Nachrichteninhalts bei einer ausreichenden Übereinstimmung des dritten Authentifizierungscodes mit dem ersten Authentifizierungscode festgestellt.

Abhängig von dem festgestellten Ergebnis der Authentizität und/oder Integrität wird ein Steuersignal bereitgestellt, das beispielsweise einem Nutzer anzeigt, ob die Authentizität und/oder Integrität bestätigt wird. War das Feststellen der Authentizität und/oder Integrität nicht erfolgreich, so wird dem Nutzer beispielsweise ein Hinweis angezeigt, dass die Authentizität und/oder Integrität ungültig ist. Im Einzelnen wird die Authentizität und/oder Integrität dann bestätigt, wenn der dritte Authentifizierungscode mit dem ersten Authentifizierungscode eine ausreichende Übereinstimmung aufweist. Die Authentizität und/oder die Integrität sind beispielsweise ungültig, wenn der dritte Authentifizierungscode mit dem ersten Authentifizierungscode keine ausreichende Übereinstimmung aufweist. Dies kann beispielsweise auch nur mittels Teilauthentifizierungscodes erfolgen, indem beispielsweise der erste Authentifizierungscode und/oder der dritte Authentifizierungscode jeweils aus einem Teilauthentifizierungscode gebildet wird, der über insbesondere einen bestimmten Abschnitt des sich wiederholenden Nachrichteninhalts gebildet wird bzw. wurde.

In einer weiteren Variante wird das erfindungsgemäße Verfahren von einem Back-End-Service eines Back-Ends ausgeführt, wobei die Nachrichten jeweils von Empfängern empfangen werden und an den Back-End-Service, beispielsweise über ein Netzwerk, übermittelt werden. Der Back-End-Service wertet dann vorzugsweise die Nachrichten, die von einem bestimmten Empfänger empfangen wurden, aus. Alternativ kann der Back-End-Service die von unterschiedlichen Empfängern empfangenen und von den Empfängern dem Backend-Service bereitgestellten Nachrichten gemeinsam auswerten. Dabei wird unter Auswerten ein Feststellen der Authentizität und/oder der Integrität des sich wiederholenden Nachrichteninhalts bei einer ausreichenden Übereinstimmung des dritten Authentifizierungscodes mit dem ersten Authentifizierungscode verstanden.

Mit anderen Worten betrifft die Erfindung, die beispielsweise in der Fig. 1 und der Fig. 2 gezeigt ist, ein Verfahren zum Schutz der Integrität und Authentizität von Nachrichten mit sich wiederholenden Nachrichteninhalt, beispielsweise Beacon-Nachrichten, durch einen Authentifizierungscode, beispielsweise eine kryptographische Integritätsprüfsumme, insbesondere einen Message Authentication Code (MAC), einen Message Integrity Code oder eine digitale Signatur.

Dabei wird vorteilhaft die spezielle Eigenschaften des sich wiederholenden Nachrichteninhalts der Nachrichten, beispielsweise von Beacon-Nachrichten, verwendet, dass eine solche Nachricht beispielsweise regelmäßig wiederholt ausgesendet wird, z. B. alle 100 ms. Dabei umfassen die Nachrichten einen sich langsam ändernden Nachrichteninhalt oder einen sich wiederholenden Nachrichteninhalt. Mit anderen Worten sind Teile des Nachrichteninhalts der Nachrichten identisch oder ändern sich zumindest nur teilweise und langsam. Dies bedeutet beispielsweise, dass regelmäßig redundante bzw. identische Informationen ausgesendet bzw. bereitgestellt werden.

Durch das erfindungsgemäße Verfahren wird eine Folge bzw. Mehrzahl von Nachrichten mit sich wiederholenden Nachrichteninhalt beispielsweise durch einen Authentifizierungscode, beispielsweise die Teilauthentifizierungscodes, der erste Authentifizierungscode und/oder zweite Authentifizierungscode, geschützt. Einzelne Nachrichten enthalten dabei einen Teilauthentifizierungscode, der auch als partial MAC oder pMAC bezeichnet werden kann.

Ein Empfänger empfängt dann beispielsweise mehrere Nachrichten Senders. Die Nachrichten enthalten einen im Wesentlichen identischen Nachrichteninhalt bzw. einen sich wiederholenden Nachrichteninhalt, sowie jeweils mindestens einen jeweils unterschiedlichen Teilauthentifizierungscode. Der Empfänger prüft nun beispielsweise die mehreren Teilauthentifizierungscodes, in dem der Empfänger beispielsweise jeweils lokale Teilauthentifizierungscodes zu den mehreren Teilauthentifizierungscodes bildet und die jeweiligen lokale Teilauthentifizierungscodes mit den jeweiligen Teilauthentifizierungscodes (des Senders) vergleicht, sowie insbesondere die Übereinstimmung des sich wiederholenden Nachrichteninhalts. Der sich wiederholende Nachrichteninhalt wird insbesondere dann als gültig akzeptiert, wenn eine vorgegebene Anzahl von übereinstimmenden Nachrichten und (jeweils unterschiedliche) Teilauthentifizierungscodes vorliegen.

Beispielsweise werden bei der Prüfung der Integrität und/oder Authentizität mehrere unterschiedliche Teilauthentifizierungscodes der jeweiligen Nachrichten kombiniert überprüft, wobei beispielsweise bei diesem Kombinieren der erste Authentifizierungscode bzw. der dritte Authentifizierungscode berechnet werden kann. Durch dieses Kombinieren der Teilauthentifizierungscodes bzw. der lokalen Teilauthentifizierungscodes wird die effektive Schlüssellänge des ersten Authentifizierungscodes bzw. dritten Authentifizierungscodes schrittweise für jeden berücksichtigten Teilauthentifizierungscode erhöht. Ein Empfänger kann beispielsweise einen erwünschten Sicherheitslevel für den sich wiederholenden Nachrichteninhalt dadurch erreichen, indem er mehrere Nachrichten mit sich wiederholenden Nachrichteninhalt empfängt und die Teilauthentifizierungscodes miteinander kombiniert bzw. analog dazu die lokalen Teilauthentifizierungscodes miteinander kombiniert. Danach kann der Empfänger beispielsweise die jeweiligen Teilauthentifizierungscodes bzw. lokalen Teilauthentifizierungscodes miteinander vergleichen, um insbesondere eine Authentizität und/oder Integrität des sich wiederholenden Nachrichteninhalts festzustellen, wobei dies auch insbesondere abschnittsweise erfolgen kann.

Der Sender kann dazu beispielsweise wechselnde/unterschiedliche Teilauthentifizierungscodes (Teilauthentifizierungscodes die sich auf unterschiedliche Abschnitte des sich wiederholenden Nachrichteninhalts beziehen), beispielsweise wechselnde kryptographische Teilprüfcodes mit 8 Bit, 16 Bit oder 24 Bit, verwenden. Ein einzelner derartiger Teilauthentifizierungscode wäre beispielsweise aus kryptographischer Sicht ungeeignet (zu schwach), um einen Angriff zu erkennen. Insbesondere durch die gemeinsame Prüfung von Teilauthentifizierungscodes mehrerer Nachrichten mit sich wiederholendem Nachrichteninhalt kann ein höheres Sicherheitsniveau erreicht werden.

Die Teilauthentifizierungscodes können beispielsweise auf unterschiedliche Weise gebildet werden.

In einer ersten Variante können die Teilauthentifizierungscodes mittels Nachrichtenauthentisierungscodes MAC (HMAC, AES-CBCMAC) gebildet werden. Zunächst wird hierzu beispielsweise ein zweiter Authentifizierungscode, beispielsweise ein Nachrichtenauthentisierungscode, in voller Länge (z. B. 128 bit, 256 bit) über den sich wiederholenden Nachrichteninhalt berechnet. Einzelne Nachrichten enthalten vorzugsweise jeweils einen Teil der MAC (z. B. 8 bit) in Form eines Teilauthentifizierungscodes. Dabei wird zusätzlich insbesondere eine Information in den Nachrichten übertragen, welcher Teil des zweiten Authentifizierungscodes, insbesondere in Form des jeweiligen Teilauthentifizierungscodes, jeweils übertragen wird. Dies kann beispielsweise eine Nummer sein, anhand der ein Empfänger insbesondere eine Reihenfolge der Teilauthentifizierungscodes feststellen kann, um beispielsweise den ersten Authentifizierungscode zu berechnen. Als zweiter Authentifizierungscode bzw. als Teilauthentifizierungscode kann beispielsweise auch eine asymmetrische digitale Signatur (z.B. ECDSA, DSA, RSA) in Teilen übertragen werden.

In einer weiteren Variante wird eine vorzugsweise redundante Codierung verwendet (z. B. es reichen beliebige 8 von 16 Nachrichten, um den zweiten Authentifizierungscode bzw. den ersten Authentifizierungscode rekonstruieren zu können). Eine derartige redundante Übertragung ist z. B. der Audioübertragung über paketorientierte Netze bekannt, speziell bei RTP (RFC2198). Auch hier wird vorzugsweise zusätzlich eine Information in den Nachrichten übertragen, die beispielsweise angibt, auf welchen Abschnitt des sich wiederholenden Nachrichteninhalts, beispielsweise Bit 16-32 des sich wiederholenden Nachrichteninhalts, sich der jeweilige Teilauthentifizierungscode bezieht. Ein Empfänger kann dann anhand dieser Information und der (unterschiedlichen) Teilauthentifizierungscodes einen längeren Authentifizierungscode, beispielsweise den ersten Authentifizierungscode, ermitteln.

In einer weiteren Variante können die Teilauthentifizierungscodes einer Codefolge oder einer Stream Cipher gebildet werden. Hierzu enthalten die Nachrichten einen Abschnitt einer kryptographischen Stream Cipher als Authentifizierungscode, der vorzugsweise über den sich wiederholenden Nachrichteninhalt gebildet wird.

In einer weiteren Variante wird die Stream Cipher abhängig von dem Nachrichteninhalt und/oder eines Zählerwertes und/oder einer Zeitinformation bestimmt. In aufeinanderfolgenden Nachrichten wird insbesondere dabei ein unterschiedlicher Ausschnitt/Abschnitt aus der Stream Cipher Codefolge verwendet.

Eine Nachricht kann beispielsweise eine Sendekennung (z. B. fest, wechselnd, pseudonym) und optional statische oder feste Statusinformationen (z. B. Temperatur, Zeitinformation, Ortskoordinaten, URL) enthalten, die zusätzlich bei der Prüfung der Authentizität und/oder Integrität überprüft werden. Hierzu kann der Sender beispielsweise diese Informationen in der Nachricht ablegen und ein Empfänger prüft, ob diese Statusinformationen bzw. Nachrichten beispielsweise innerhalb eines vorgegebenen Zeitraumes bereitgestellt bzw. gesendet wurden.

Es sind insbesondere vielfältige Anwendungen von Nachrichten mit sich wiederholenden Nachrichteninhalten möglich. Beispielsweise zur Indoor-Lokalisierung, insbesondere bei einer Lokalisierung in einer Fertigungshalle oder einer Raffinerie, drahtlose Low-Power-Sensoren in einer prozesstechnischen Anfrage, drahtlose Sensornetzwerke, drahtlose Sensor-Aktornetzwerke, intelligente Maschinen/Geräte, die eine Geräteidentifizierungsinformation bzw. Gerätestatusinformation drahtlos bereitstellen, Ticketing, Freischalten einer Maschine oder Türe oder Tracking von Personen oder Gegenständen.

Unterschiedliche Empfänger können beispielsweise unterschiedlich hohe Kriterien anlegen, unter welchen Umständen sie den sich wiederholenden Nachrichteninhalt als gültig akzeptieren.

Diese können beispielsweise von der Art des Nachrichteninhalts abhängen. Das Verfahren kann beispielsweise auch für andere sich wiederholende Nachrichteninhalte, vorzugsweise sich zyklisch wiederholende Nachrichteninhalte, angewandt werden. Beispielsweise für Navigationsnachrichten eines Satellitennavigationsdienstes (GPS, Galileo, Beidou, Glonass). Dabei kann insbesondere eine einzelne Navigationsnachricht (Nachrichten mit sich wiederholenden Nachrichteninhalt) eine Teilprüfsumme (Teilauthentifizierungscode) aufweisen, die auf ihre Authentizität und/oder Integrität beispielsweise auf einem niedrigen Sicherheitsniveau prüfbar ist.

In einer weiteren Variante werden die Authentizität und/oder Integrität der Nachrichten dadurch festgestellt, dass der sich wiederholende Nachrichteninhalt identisch ist. Dies wird insbesondere dadurch festgestellt, dass beispielsweise der erste Authentifizierungscode und der dritte Authentifizierungscode eine ausreichende Übereinstimmung aufweisen. Der sich wiederholende Nachrichteninhalt kann beispielsweise auch Nutzerdaten und/oder Nutzdaten und/oder eine Sender-ID umfassen.

In einer weiteren Variante werden beispielsweise Abschnitte oder Teile des sich wiederholenden Nachrichteninhaltes als gültig akzeptiert, deren Authentizität und/oder Integrität durch die jeweils ihnen zugehörigen Teilauthentifizierungscodes bestätigt wurde.

Alternativ oder zusätzlich können Abschnitte oder Teile des sich wiederholenden Nachrichteninhaltes als gültig akzeptiert werden. Dies ist beispielsweise dann möglich, wenn die zugehörigen Teilauthentifizierungscodes der jeweiligen Abschnitte (oder Teile) als gültig bestätigt wurden, indem beispielsweise aus diesen Teilauthentifizierungscodes der erste Authentifizierungscode gebildet wurde und die Gültigkeit des ersten Authentifizierungscodes bestätigt wurde. Alternativ oder zusätzlich kann der erste Authentifizierungscode auch abschnittsweise geprüft werden. Wird die Gültigkeit für Abschnitte des ersten Authentifizierungscodes bestätigt, so werden entsprechend auch die Abschnitte des sich wiederholenden Nachrichteninhalts als gültig akzeptiert.

Mit anderen Worten kann die Authentizität und/oder die Integrität der sich wiederholende Nachrichteninhalte auch unvollständig als gültig akzeptiert werden, indem beispielsweise jeweils nur für die Teile bzw. Abschnitte der Nachrichten eine gültige Authentizität und/oder Integrität festgestellt wird, für die gültige Teilauthentifizierungscodes bzw. ein erster Authentifizierungscode festgestellt wurden. Beispielsweise können hierdurch bei Nachrichten, die jeweils zehn Abschnitte haben, wobei für jeden Abschnitt jeweils ein Teilauthentifizierungscode gebildet wurde, die ersten drei Abschnitte, der fünfte Abschnitt und der achte Abschnitt des sich wiederholenden Nachrichteninhaltes der Nachrichten als gültig klassifiziert wird. Die restlichen Abschnitte gelten beispielsweise solange als ungültig, bis entsprechende korrekte Teilauthentifizierungscodes empfangen wurden.

Beim Feststellen der Authentizität und/oder Integrität der Nachrichten können beispielsweise noch weitere Prüfkriterien zusätzlich berücksichtigt werden.

In einer weiteren Variante wird als Prüfkriterium die Anzahl oder die Rate der unterschiedlichen, vorzugsweise gültigen, Teilauthentifizierungscodes während der gesamten Kommunikation zwischen einem Sender und einem Empfänger berücksichtigt, sodass beispielsweise eine vorgegebene Mindestanzahl erreicht werden muss, um insbesondere den sich wiederholenden Nachrichteninhalt als gültig zu akzeptieren. Unter Rate kann beispielsweise eine Anzahl von Nachrichten verstanden werden, die insbesondere entweder während der gesamten Kommunikation zwischen einem Sender und Empfänger ausgetauscht werden, oder es gibt beispielsweise vorgegebene Zeitfenster innerhalb denen eine vorgegebene Mindestanzahl an unterschiedlichen Teilauthentifizierungscodes zwischen dem Sender und Empfänger ausgetauscht werden sollen.

In einer weiteren Variante wird eine effektive Schlüssellänge des ersten Authentifizierungscodes abhängig von den empfangenen Teilauthentifizierungscodes bestimmt, indem beispielsweise die effektive Schlüssellänge mit einem vorgegebenen Schwellwert verglichen wird. Die Authentizität und/oder die Integrität des sich wiederholenden Nachrichteninhalts wird dann vorzugsweise als gültig akzeptiert, wenn die effektive Schlüssellänge vorzugsweise diesen Schwellwert überschreitet.

In einer weiteren Variante wird das Sicherheitsniveau des sich wiederholenden Nachrichteninhalts dynamisch angepasst. Das Sicherheitsniveau des sich wiederholenden Nachrichteninhalts erhöht sich beispielsweise, wenn ein gültiger Teilauthentifizierungscode empfangen wird, insbesondere um einen vorgegebenen Wert. Das Sicherheitsniveau sinkt beisielsweise im zeitlichen Verlauf ab, insbesondere bis wieder ein gültiger Teilauthentifizierungscode empfangen wird, der beispielsweise das Sicherheitsniveau des sich wiederholenden Nachrichteninhalts um den vorgegeben Wert erhöht. Falls das aktuelle Sicherheitsniveau des sich wiederholenden Nachrichteninhalts einer Nachricht beispielsweise höher ist als ein vorgegebener Schwellwert, so wird die Nachricht oder der sich wiederholdende Nachrichteninhalt als gültig akzeptiert (also die Integrität und/oder Authentizität wird bestätigt).

In einer weiteren Variante wird die Integrität und/oder die Authentizität jeweils einer Nachricht bestätigt, wenn die Integrität und/oder die Authentizität des jeweiligen sich wiederholenden Nachrichteninhalts der jeweiligen Nachricht bestätigt wurde.

In einer weiteren Variante werden zusätzliche Verfahrensschritte ausgeführt, in dem ein (kryptographischer) Schlüssel zum Berechnen der Teilauthentifizierungscodes und/oder zum Berechnen des dritten Authentifizierungscodes und/oder zum Berechnen der lokalen Teilauthentifizierungscodes bereitgestellt wird. Das Bereitstellen erfolgt vorzugsweise über einen gesicherten Kommunikationskanal.

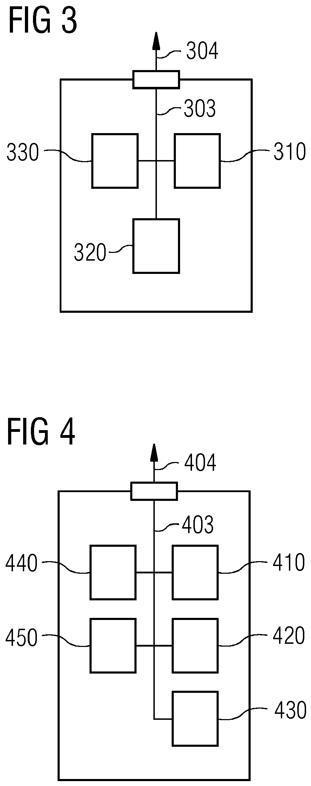

Die Fig. 3 zeigt ein drittes Ausführungsbeispiel der Erfindung als ein Bereitstellungsgerät.

Im Einzelnen umfasst das Bereitstellungsgerät zum Bereitstellen von authentisierbaren Nachrichten ein erstes Berechnungsmodul 310, ein zweites Berechnungsmodul 320, eine optionale erste Kommunikationsschnittstelle 304 und ein erstes Bereitstellungsmodul 330, die über einen ersten Bus 303 kommunikativ miteinander in Verbindung stehen.

Das Bereitstellungsgerät kann beispielsweise zusätzlich noch eine weitere oder mehrere weitere Komponente umfassen, wie beispielsweise einen Prozessor, eine Speichereinheit, ein Eingabegerät, insbesondere eine Computertastatur oder eine Computermaus, oder einen Monitor.

Mittels der ersten Kommunikationsschnittstelle 304 können die Nachrichten beispielsweise bereitgestellt werden. Beispielsweise können die Nachrichten mittels eines ersten Erzeugungsmoduls erzeugt werden.

Das erste Berechnungsmodul 310 ist zum Bestimmen eines sich wiederholenden Nachrichteninhalts der Nachrichten eingerichtet.

Das erste Berechnungsmodul 310 kann beispielsweise mittels des Prozessors, der Speichereinheit und einer ersten Programmkomponente implementiert werden, die beispielsweise durch ein Ausführen von Programmbefehlen den Prozessor derart konfiguriert, dass der sich wiederholende Nachrichteninhalt bestimmt wird.

Das zweite Berechnungsmodul 320 ist zum Berechnen von Teilauthentifizierungscodes für die Nachrichten anhand des sich wiederholenden Nachrichteninhalts eingerichtet, wobei ein erster Authentifizierungscode für zumindest einen Teil der Nachrichten aus zumindest einem Teil der Teilauthentifizierungscode zum Authentisieren des sich wiederholenden Nachrichteninhalts berechenbar ist.

Das zweite Berechnungsmodul 320 kann beispielsweise mittels des Prozessors, der Speichereinheit und einer zweiten Programmkomponente implementiert werden, die beispielsweise durch ein Ausführen von Programmbefehlen den Prozessor derart konfiguriert, dass die Teilauthentifizierungscodes berechnet werden.

Das erste Bereitstellungsmodul 330 ist zum Bereitstellen der Nachrichten eingerichtet, wobei die Nachrichten den sich wiederholenden Nachrichteninhalt und jeweils mindestens einen der Teilauthentifizierungscode umfassen.

Das erste Bereitstellungsmodul 330 kann beispielsweise mittels des Prozessors, der Speichereinheit und einer dritten Programmkomponente implementiert werden, die beispielsweise durch ein Ausführen von Programmbefehlen den Prozessor derart konfiguriert, dass die Nachrichten bereitgestellt werden.

Das erste Berechnungsmodul 310 und das zweite Berechnungsmodul 320 können beispielsweise auch als ein erstes integrales Berechnungsmodul ausgebildet sein.

In einer Variante des Bereitstellungsgerätes wird dem Bereitstellungsgerät ein (kryptographischer) Schlüssel zum Berechnen der Teilauthentifizierungscodes bereitgestellt. Das Bereitstellen erfolgt vorzugsweise über einen gesicherten Kommunikationskanal. Der kryptographische Schlüssel kann beispielsweise auch zum Berechnen des zweiten Authentifizierungscode verwendet werden, der beispielsweise in einigen Ausführungsformen die Grundlage für die Teilauthentifizierungscodes bildet.

Die Fig. 4 ist ein viertes Ausführungsbeispiel der Erfindung als ein Authentisierungsgerät.

Das Authentisierungsgerät zum Authentisieren von authentisierbaren Nachrichten umfasst ein drittes Berechnungsmodul 410, ein viertes Berechnungsmodul 420, ein fünftes Berechnungsmodul 430, ein erstes Vergleichsmodul 440, eine zweite optionale Kommunikationsschnittstelle 404 und ein erstes Feststellungsmodul 450, die über einen zweiten Bus 403 kommunikativ miteinander in Verbindung stehen.

Das Authentisierungsgerät kann beispielsweise zusätzlich noch eine weitere oder mehrere weitere Komponente umfassen, wie beispielsweise einen Prozessor, eine Speichereinheit, ein Eingabegerät, insbesondere eine Computertastatur oder eine Computermaus, oder einen Monitor.

Mittels der zweiten Kommunikationsschnittstelle 404 können die Nachrichten beispielsweise empfangen werden.

Das dritte Berechnungsmodul 410 ist zum Bestimmen eines sich wiederholenden Nachrichteninhalts der Nachrichten eingerichtet.

Das dritte Bereitstellungsmodul 410 kann beispielsweise mittels des Prozessors, der Speichereinheit und einer vierten Programmkomponente implementiert werden, die beispielsweise durch ein Ausführen von Programmbefehlen den Prozessor derart konfiguriert, dass der sich wiederholende Nachrichteninhalt bestimmt wird.

Das vierte Berechnungsmodul 420 ist zum Ermitteln von Teilauthentifizierungscodes der Nachrichten für den sich wiederholenden Nachrichteninhalt eingerichtet.

Das vierte Berechnungsmodul 420 kann beispielsweise mittels des Prozessors, der Speichereinheit und einer fünften Programmkomponente implementiert werden, die beispielsweise durch ein Ausführen von Programmbefehlen den Prozessor derart konfiguriert, dass die Teilauthentifizierungscodes ermittelt werden.

Das fünfte Berechnungsmodul 430 ist zum Berechnen von lokalen Teilauthentifizierungscodes für die Nachrichten anhand des sich wiederholenden Nachrichteninhalts eingerichtet.

Das fünfte Bereitstellungsmodul 430 kann beispielsweise mittels des Prozessors, der Speichereinheit und einer sechsten Programmkomponente implementiert werden, die beispielsweise durch ein Ausführen von Programmbefehlen den Prozessor derart konfiguriert, dass die lokalen Teilauthentifizierungscodes berechnet werden.

Das erste Vergleichsmodul 440 ist zum Vergleichen der Teilauthentifizierungscodes mit den entsprechenden lokalen Teilauthentifizierungscodes eingerichtet.

Das erste Vergleichsmodul 440 kann beispielsweise mittels des Prozessors, der Speichereinheit und einer siebten Programmkomponente implementiert werden, die beispielsweise durch ein Ausführen von Programmbefehlen den Prozessor derart konfiguriert, dass die Teilauthentifizierungscodes mit den entsprechenden lokalen Teilauthentifizierungscodes verglichen werden.

Das erste Feststellungsmodul 460 ist zum Feststellen einer Authentizität und/oder einer Integrität des sich wiederholenden Nachrichteninhalts eingerichtet, wenn eine ausreichende Übereinstimmung der Teilauthentifizierungscodes mit den lokalen Teilauthentifizierungscodes festgestellt wird.

Das erste Feststellungsmodul 460 kann beispielsweise mittels des Prozessors, der Speichereinheit und einer achten Programmkomponente implementiert werden, die beispielsweise durch ein Ausführen von Programmbefehlen den Prozessor derart konfiguriert, dass eine Authentizität und/oder eine Integrität des sich wiederholenden Nachrichteninhalts feststellbar ist.

In einer Variante des Authentisierungsgerätes wird dem Authentisierungsgerät ein (kryptographischer) Schlüssel zum Erstellen eines dritten Authentifizierungscodes über den sich wiederholenden Nachrichteninhalt und/oder der lokalen Teilauthentifizierungscodes bereitgestellt. Das Bereitstellen erfolgt vorzugsweise über einen gesicherten Kommunikationskanal.

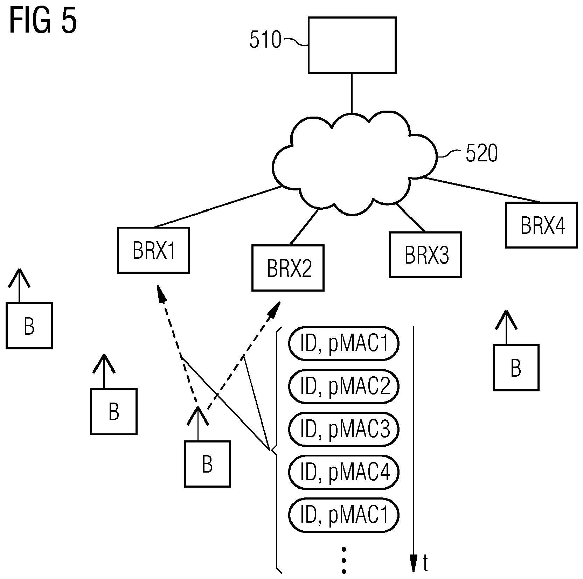

Die Fig. 5 zeigt ein fünftes Ausführungsbeispiel der Erfindung als ein System.

Im Einzelnen kann das System mindestens ein erfindungsgemäßes Bereitstellungsgerät, das authentifizierbare Nachrichten B mit sich wiederholenden Nachrichteninhalt nach dem erfindungsgemäßen Verfahren, das beispielsweise in Fig. 1 dargestellt ist, bereitstellt. Die Nachrichten werden dabei insbesondere zu bestimmten und/oder festlegten Zeitpunkten t, vorzugsweise entsprechend eines vorgegebenen Zeitschemas, bereitgestellt. Das Zeitschema kann beispielsweise ein zyklisches Wiederholen des sich wiederholenden Nachrichteninhalts vorgeben.

Im konkreten Ausführungsbeispiel umfasst das System ein erstes erfindungsgemäßes Bereitstellungsgerät und ein zweites erfindungsgemäßes Bereitstellungsgerät, die die Nachrichten B bereitstellen oder aussenden.

Zusätzlich kann das System mindestens ein erfindungsgemäßes Authentisierungsgerät, beispielsweise ein erstes erfindungsgemäßes Authentisierungsgeräts BRX1, ein zweites erfindungsgemäßes Authentisierungsgeräts BRX2, ein drittes erfindungsgemäßes Authentisierungsgeräts BRX3 und ein viertes erfindungsgemäßes Authentisierungsgeräts BRX4, umfassen, das die authentifizierbaren Nachrichten B mit sich wiederholenden Nachrichteninhalt nach dem erfindungsgemäßen Verfahren, das beispielsweise in Fig. 2 dargestellt ist, authentisiert. Dabei soll insbesondere eine Authentizität und/oder eine Integrität des sich wiederholenden Nachrichteninhalts festgestellt werden, wenn beispielsweise eine ausreichende Übereinstimmung zwischen dem ersten Authentifizierungscode und dem dritten Authentifizierungscode festgestellt wurde. Die Authentisierungsgeräte können kommunikativ mit einem Netzwerk 520 verbunden sein, um beispielsweise miteinander oder einem Back-End 510 zu kommunizieren.

Die Authentisierungsgeräte können die Nachrichten B mit dem sich wiederholenden Nachrichteninhalt und den Teilauthentifizierungscodes, die von dem mindestens einen Bereitstellungsgerät bereitgestellt wurden, beispielsweise untereinander austauschen, wenn beispielsweise das Bereitstellungsgerät sich außerhalb der Empfangsreichweite des ersten Authentisierungsgeräts BRX1 befindet, aber die anderen Authentisierungsgeräte BRX2 - BRX4 die Nachrichten noch empfangen können.

Die Nachrichten B werden wiederholt von einem der Bereitstellungsgeräte ausgesendet und umfassen beispielsweise eine Senderidentifikationsinformation ID des Senders, beispielsweise eine MAC-Adresse und/oder einen Universally Unique Identifier (UUID) und/oder ein Pseudonym. Zusätzlich umfassen die Nachrichten B jeweils einen Teilauthentifizierungscode, beispielsweise einen ersten Teilauthentifizierungscode pMAC1 einer ersten Nachricht B, einen zweiten Teilauthentifizierungscode pMAC2 einer zweiten Nachricht B, einen dritten Teilauthentifizierungscode pMAC3 einer dritten Nachricht B und einen vierten Teilauthentifizierungscode pMAC4 einer vierten Nachricht B.

Die Authentisierungsgeräte BRX1-BRX4 speichern beispielsweise mehrere Nachrichten mit der gleichen Senderidentifikationsinformation und bildet unter Verwendung der Teilauthentifizierungscode pMAC1-pMAC4 den ersten Authentifizierungscode, beispielsweise eine Prüfsumme, und prüft diesen, oder die Authentisierungsgeräte BRX1-BRX4 prüfen die Teilauthentifizierungscodes pMAC1-pMAC4 jeweils direkt. Die Authentisierungsgeräte BRX1-BRX4 können dann beispielsweise ein Sicherheitsniveau, beispielsweise ein Vertrauensmaß, abhängig von der Anzahl überprüften Teilauthentifizierungscodes pMAC1-pMAC4 ermitteln.

In einer weiteren Variante BRX1-BRX4 als Empfänger oder Weiterleitungsgeräte ausgebildet. Im Einzelnen werden die Nachrichten P durch die Empfänger BRX1-BRX4 empfangen und von einem Back-End-Service eines Back-Ends 510 ausgewertet. Die Nachrichten werden jeweils von den Empfängern BRX1-BRX4 empfangen und an den Back-End-Service, beispielsweise über das Netzwerk 520, übermittelt oder weitergeleitet. Das Back-End 510 umfasst dabei vorzugsweise ein erfindungsgemäßes Authentisierungsgerät mittels dem der Back-End-Service dann vorzugsweise die Nachrichten eines Senders (beispielsweise eines bestimmten Senders), die insbesondere von einem bestimmten Empfänger BRX1-BRX4 empfangen wurden, auswertet. Alternativ kann der Back-End-Service die von unterschiedlichen Empfängern BRX1-BRX4 empfangenen und dem Backend-Service bereitgestellten/weitergeleiteten Nachrichten gemeinsam bzw. zentral auswerten. Dabei wird unter Auswerten ein Feststellen der Authentizität und/oder der Integrität des sich wiederholenden Nachrichteninhalts bei einer ausreichenden Übereinstimmung des dritten Authentifizierungscodes mit dem ersten Authentifizierungscode verstanden.

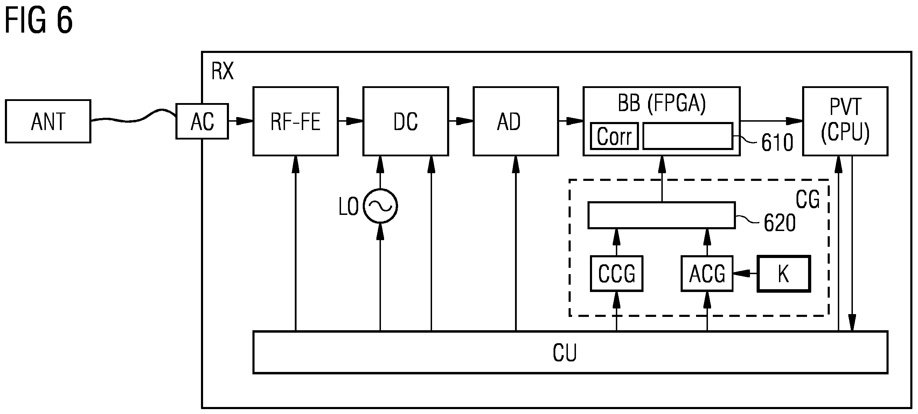

Die Fig. 6-8 zeigen ein sechstes Ausführungsbeispiel der Erfindung.

Die Erfindung bzw. das erfindungsgemäße Verfahren kann auch bei einer Spreizbandübertragung (Spread Spectrum) realisiert werden, bei der durch einen Sender Nachrichten mit einem sich wiederholenden Nachrichteninhalt, beispielsweise eine sich zyklisch wiederholende Spreizcodefolge, übertragen werden, wobei es sich bei den Nachrichten bzw. sich wiederholenden Nachrichteninhalt insbesondere um einen sich zyklisch wiederholenden Nachrichteninhalt bzw. um eine sich zyklisch wiederholende Spreizcodefolge handelt. Bei dem sich wiederholenden Nachrichteninhalt bzw. zyklisch wiederholenden Spreizcodefolge kann es sich beispielsweise um Gold Code oder ein mittels eines LFSRs erzeugte Codefolge, Neumann-Hoffman (NH) secondary Code handeln, wie sie beispielsweise von Galileo, GPS oder Beidou-Satellitennavigationssystemen verwendet werden.

Eine solche sich wiederholende Spreizcodefolge kann erfindungsgemäß jeweils einen Teilauthentifizierungscode aufweisen.

Auf diese sich wiederholende Spreizcodefolge kann beispielsweise das erfindungsgemäße Verfahren zum Bereitstellen von authentisierbaren Nachrichten angewendet werden, so wie dies beispielsweise in den ersten beiden Ausführungsbeispielen und deren Varianten erläutert wurde.

Die jeweiligen Teilauthentifizierungscodes der jeweiligen Nachrichten kann auf unterschiedliche Weise bereitgestellt werden. Bei dem erfindungsgemäßen Verfahren können beispielsweise die Nachrichten bzw. der sich wiederholende Nachrichteninhalt der Nachrichten, insbesondere die sich zyklisch wiederholende Spreizcodefolge, um den jeweiligen Teilauthentifizierungscode erweitert werden. Alternativ kann der jeweilige Teilauthentifizierungscode einen Teil des sich wiederholende Nachrichteninhalts ersetzen oder Exklusiv-Oder mit dem sich wiederholende Nachrichteninhalt verknüpft werden.

Ein Empfänger kann das Signal (kann insbesondere auch als Sendesignal bezeichnet werden) eines Navigationssatelliten, das die Nachrichten mit dem sich wiederholenden Nachrichteninhalt umfasst, mittels eines Korrelators empfangen. Dazu führt der Empfänger beispielsweise eine Korrelation zwischen dem empfangenen Signal und einem lokalen Spreizcode bzw. der lokalen Spreizcodefolge durch, um beispielsweise den Ranging Code, d. h. Laufzeitschätzung, zu ermitteln. Bei Übereinstimmung des empfangenen Signals mit der lokalen Spreizcodefolge, die beispielsweise auch als Replika bzw. Replikasignal bezeichnet wird, ergibt sich ein Korrelationspeak. Die Höhe, die beispielsweise auch als Pegel bezeichnet wird, des Korrelationspeaks ist ein Indikator für die Leistung bzw. die Signalstärke des empfangenen Signals.

Erfindungsgemäß prüft der Empfänger den zeitlichen Verlauf des Korrelationspeak-Pegels, um die Teilauthentifizierungscodes des Senders zu überprüfen.

Hierzu werden beispielsweise beim Replikasignal durch den Empfänger für die entsprechenden Abschnitte des sich wiederholenden Nachrichteninhalts entsprechende lokale Teilauthentifizierungscodes gebildet. Mit anderen Worten handelt es sich bei den Teilauthentifizierungscodes des Replikasignals um die lokalen Teilauthentifizierungscodes des Empfängers.

Wenn die Teilauthentifizierungscodes des Replikasignals, das beispielsweise die Nachrichten mit den sich wiederholenden Nachrichteninhalt und/oder Teilauthentifizierungscodes der jeweiligen Nachrichten umfasst, mit den Teilauthentifizierungscodes des empfangenen Signals übereinstimmen, ist insbesondere kein Leistungsabfall zu beobachten.

Wenn die Teilauthentifizierungscodes des empfangenen Sendesignals dagegen ungültig sind, ist ein Abfall des Signalpegels zu beobachten. Ein empfangenes Signal eines Senders, das die Nachrichten mit den sich wiederholenden Nachrichteninhalten bzw. die sich zyklisch wiederholende Spreizcodefolge umfasst, wird als gültig akzeptiert, wenn der Korrelationspeak beim Vergleichen des jeweiligen Teilauthentifizierungscodes-Abschnittes der jeweiligen Nachricht des Signals des Senders mit dem jeweiligen lokalen Teilauthentifizierungscodes-Abschnittes der jeweiligen Nachricht des Replikasignals übereinstimmt.

Die Fig. 6 zeigt beispielsweise ein Blockschaltbild mit wesentlichen Funktionsblöcken eines Empfängers RX, an den über eine Antennenbuchse AC (Antenna Connector) eine Antenne ANT angeschlossen werden kann (alternativ könnte auch eine interne Antenne vorgesehen sein). Das von der Antenne bereitgestellte Signal wird durch eine Hochfrequenzbaugruppe RF-FE (Radio Frequency Front End) bearbeitet (Filterung, Verstärkung), dann einem Down-Converter DC bereitgestellt, der das Signal mit einem Signal des Local Oscillator LO mischt (down conversion) und einem Analog-Digital-Wandler AD bereitstellt. Dieser stellt der Basisbandverarbeitung BB zumindest ein digitalisiertes Signal bereit (es können auch mehrere Signale bereitgestellt werden).

Innerhalb der Basisbandverarbeitung BB wird ein Spreiz-Code durch einen Codegenrator CG erzeugt und es erfolgt eine Korrelation durch einen Korrelator Corr mit dem digitalisierten Empfangssignal. Die dadurch ermittelte Laufzeitschätzung, beispielsweise Pseudoranges, wird einer Berechnungskomponente PVT bereitgestellt, die daraus beispielsweise die Position, Geschwindigkeit und Zeit berechnet.

Der Empfänger RX wird von einer Steuerung CU (control unit) gesteuert. Diese konfiguriert auch die Baugruppen, z.B. um ein Frequenzband durch Änderung der Frequenz des Local Oszillators LO zu wählen, den Eingangs-Filter der Hochfrequenzbaugruppe RF-FE zu konfigurieren, um die Bandbreite und Abtastrate des Analog-Digital-Wandlers AD zu konfigurieren oder um ein Modulationsverfahren eine Basisbandverarbeitung BB auszuwählen. Die von der Berechnungskomponente PVT ermittelten Daten werden durch die Berechnungskomponente PVT der Steuerung CU bereitgestellt. Dort können sie z. B. weiterbearbeitet werden und auf einer Nutzerschnittstelle (nicht dargestellt) ausgegeben werden. Eine oder mehrere der Baugruppen können in einer nicht dargestellten Variante auch Statussignale der Steuerung CU bereitstellen. In einer konkreten Realisierung erfolgt die Basisbandverarbeitung BB typischerweise auf einem FPGA-Baustein und die Berechnungen der Berechnungskomponente PVT sind üblicherweise als Softwarekomponente realisiert, die eine CPU/Prozessor für diese Berechnungen konfigurieren. Der Signalfluss und die Signalverarbeitung erfolgen dabei insbesondere kontinuierlich, d. h. es wird fortlaufend das Empfangssignal digitalisiert und bearbeitet.

Im Einzelnen weist die Spreizcodefolge, die von dem CodeGenerator CG erzeugt wird, zwei Teil-Spreizcodefolgen auf: Einen zyklisch sich wiederholenden Code und einen Teilauthentifizierungscode. Der zyklisch sich wiederholenden Code wird insbesondere durch den zyklischen Codegenerator CCG (cyclic code generator) generiert. Der Teilauthentifizierungscode wird insbesondere durch einen Authentisierungscodegenerator ACG (Authentication Code Generator) erzeugt, der vorzugsweise den jeweiligen Teilauthentifizierungscode unter Verwendung eines (kryptographischen) Schlüssels K erzeugt. Diese beiden Codes werden durch einen Codekombinierer 620 (Code Combiner) zusammengeführt, um die Spreizcodefolge bzw. Nachrichten mit sich wiederholenden Nachrichteninhalt zu bilden und den jeweiligen Teilauthentifizierungscode umfassen.

Der zeitliche Verlauf des Korrelationspeaks wird durch eine Vergleichskomponente 610 (Peak Level Verifyer) überwacht, um bei der Korrelation mit dem empfangenen Signal zu überprüfen bzw. zu erkennen, ob dieses die erwarteten Teilauthentifizierungscodes aufweist. Nur wenn dies der Fall ist, bleibt insbesondere der Peak-Level des Korrelationspeaks im Wesentlichen unverändert, andernfalls fällt er zu den Zeiten ab, bei denen die Spreizcodefolge einen entsprechenden Teilauthentifizierungscode in inkorrekter Form aufweist.

Der Sender, beispielsweise ein GNSS-Satellit, weist einen entsprechenden Codegenerator auf, der verwendet wird, um das Spreizband-Sendesignal, beispielsweise eine Spreizcodefolge, zu erzeugen, wobei das Spreizband-Sendesignal die entsprechenden Teilauthentifizierungscodes für Nachrichten mit einem sich wiederholenden Nachrichteninhalt umfasst.

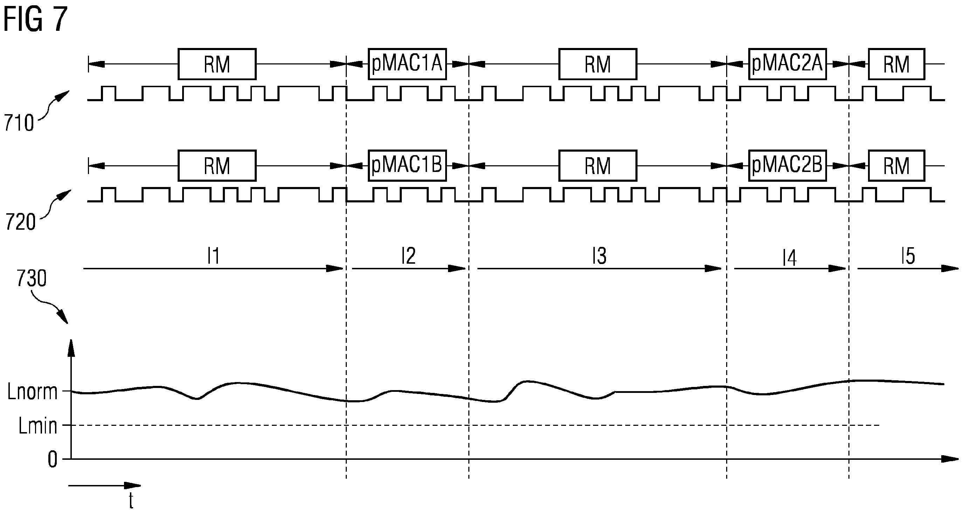

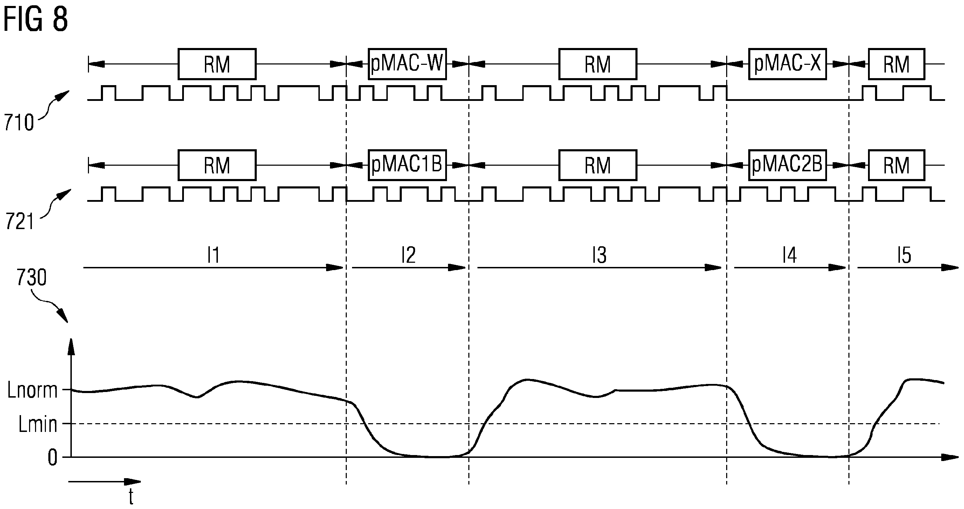

Die Fig. 7 und die Fig. 8 zeigen das prinzipielle Funktionsprinzip.

Im Einzelnen zeigt Fig. 7 ein Szenario, indem ein gültiges Signal empfangen wird.

Zunächst erzeugt ein Sender ein erstes Signal, beispielsweise ein Spreizbandsignal 710, das die Nachrichten bzw. die Spreizcodefolgen umfasst. Im Einzelnen umfasst das Spreizbandsignal 710 die Nachrichten bzw. die Spreizcodefolgen mit einem sich zyklisch wiederholenden Nachrichteninhalt RM, und Teilauthentifizierungscodes für jeweils unterschiedliche Abschnitte des sich zyklisch wiederholenden Nachrichteninhalts RM, beispielsweise einen ersten Teilauthentifizierungscode pMAC1A und einen zweiten Teilauthentifizierungscode pMAC2A. Die Nachrichten bzw. die Spreizcodefolgen sind dabei verkürzt dargestellt. Diese wären beispielsweise jeweils 50, 100, 1000, 16000 Bits (chips) lang.

Der Sender, z. B. GPS/Galileo Satellit, sendet das Spreizbandsignal 710 mit dem sich zyklisch wiederholenden Nachrichteninhalt RM, wobei zwischen dem sich zyklisch wiederholenden Nachrichteninhalt RM jeweils ein Teilauthentifizierungscode, beispielsweise der erste Teilauthentifizierungscode pMAC1A oder der zweite Teilauthentifizierungscode pMAC2A, eingefügt wird. Mit anderen Worten, werden insbesondere Nachrichten mit einem sich zyklisch wiederholenden Nachrichteninhalt RM erzeugt, wobei die Nachrichten jeweils zusätzlich einen Teilauthentifizierungscode über einen Abschnitt des sich zyklisch wiederholenden Nachrichteninhalts RM umfassen.

Der Empfänger verwendet vorzugsweise die gleiche bzw. identische Spreizcodefolge, um insbesondere ein Replikasignal 720 zu erzeugen. Mit anderen Worten, erzeugt der Empfänger beispielsweise den gleichen sich zyklisch wiederholenden Nachrichteninhalt RM, beispielsweise die Spreizcodefolge, die insbesondere auch der Sender erzeugt. Der Empfänger berechnet dann beispielsweise wie der Sender für die gleichen Abschnitte des sich wiederholenden Nachrichteninhalts RM die entsprechenden lokalen Teilauthentifizierungscodes. Beispielsweise bildet der Empfänger anhand des sich wiederholenden Nachrichteninhalts RM des Replikasignals 720 einen lokalen dritten Teilauthentifizierungscode pMAC1B. Dieser lokale dritte Teilauthentifizierungscode pMAC1B wird insbesondere über den gleichen Abschnitt des sich wiederholenden Nachrichteninhalts RM wie der erste Teilauthentifizierungscode pMAC1A gebildet. Entsprechend wird beispielsweise für den Abschnitt des sich wiederholenden Nachrichteninhalts RM, für den der zweite Teilauthentifizierungscode pMAC2A wurde, ebenfalls ein lokaler vierter Teilauthentifizierungscode pMAC2B anhand des entsprechenden Abschnitts des Replikasignals 720 gebildet.

Der Korrelator des Empfängers vergleicht das Signal 710 des Senders mit dem Replikasingal 720 des Empfängers. Hierzu können die Signale 710, 720 in Zeitintervalle eingeteilt werden. Beispielsweise werden während einem ersten Intervall I1, einem dritten Intervall I3 und einem fünften Intervall I5 der sich wiederholende Nachrichteninhalt RM verglichen. Während dem zweiten Intervall I2 und dem vierten Intervall I4 werden beispielsweise die Teilauthentifizierungscodes verglichen bzw. deren Gültigkeit festgestellt.

Im Einzelnen erzeugt der Sender insbesondere ein Vergleichssignal 730, das den Peak-Level (Lnorm) des Korrelationspeaks angibt. Weist das Signal 710 des Senders mit dem Replikasingal 720 eine ausreichende Übereinstimmung auf, beispielsweise bleibt der Peak-Level (Lnorm) des Korrelationspeaks oberhalb eines Schwellwerts (Lmin), so wird eine Authentizität und/oder Integrität des Signals bzw. des sich wiederholenden Nachrichteninhalts festgestellt. Der Peak-Level (Lnorm) schwankt insbesondere bei realen Signalen wegen dynamischen Änderungen im Funkübertragungsweg (rein mathematisch modelliert wäre der Peak-Wert konstant). Insbesondere kann, wie in den anderen Ausführungsbeispielen erläutert, aus den Teilauthentifizierungscodes ein erster Authentifizierungscode gebildet werden, der ein höheres Sicherheitsniveau aufweist, als ein Teilauthentifizierungscode für sich alleine genommen.

Die Fig. 8 zeigt ein Szenario, indem ein ungültiges Signal empfangen wird.

Wenn beispielsweise ein manipulierter bzw. korrumpierter Sender nun ein Störsignal 721 sendet, so weist dieses, da der Sender den erforderlichen (kryptographischen) Schlüssel nicht kennt, keine gültigen Teilauthentifizierungscodes auf. Ein fünfter Teilauthentifizierungscode pMAC-W hätte beispielsweise einen falschen Wert oder ein sechster Teilauthentifizierungscode pMAC-X hätte einen konstanten Wert z. B. 0.

Der Empfänger erkennt dies beispielsweise an einem Abfall des Peak-Levels des Korrelationspeaks in den Zeitabschnitten, beispielsweise Intervall I2 und Intervall I4, in denen jeweils die Teilauthentifizierungscodes übertragen wird.

Wenn eine solche Signaleigenschaft beispielsweise von Vergleichskomponente 610 (Peak Level Verifyer) erkannt wird, so wird das Signal des Senders als ungültig behandelt. Wird beispielsweise wieder eine gewisse Anzahl von Teilauthentifizierungscodes, beispielsweise Zeitabschnitte oder Intervalle mit gültigen Teilauthentifizierungscodes, ohne Peak-Level-Abfall empfangen wird, so wird das empfangene Signal beispielsweise wieder als gültig akzeptiert.

Dieses Ausführungsbeispiel, bei dem die Teilauthentifizierungscodes über eine Korrelation von Signalen (Signalverarbeitung) überprüft bzw. verglichen werden, hat insbesondere den Vorteil, dass dies auch bei Spreizbandsignalen angewendet werden kann, deren Signalpegel unterhalb der Rauschschwelle liegt (wie dies z. B. bei GPS, Galileo, Beidou der Fall ist). Es erfolgt somit insbesondere kein Vergleich auf Bit-Ebene der dekodierten Bits, sondern es wird beispielsweise indirekt anhand des beobachteten zeitlichen Verlaufs des Peak-Levels des Korrelationspeaks erkannt, ob die Teilauthentifizierungscodes den erwarteten Wert aufweisen (bzw. ausreichend übereinstimmen) .

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zum Bereitstellen von authentisierbaren Nachrichten mit den Verfahrensschritten:
- Bestimmen (110) eines sich wiederholenden Nachrichteninhalts (RM) der Nachrichten (B);
- Berechnen (120) von Teilauthentifizierungscodes (pMAC1, pMAC2, pMAC3, pMAC4, pMAC1A, pMAC2A) für die Nachrichten (B) anhand des sich wiederholenden Nachrichteninhalts (RM), wobei ein erster Authentifizierungscode für zumindest einen Teil der Nachrichten (B) aus zumindest einem Teil der Teilauthentifizierungscodes (pMAC1, pMAC2, pMAC3, pMAC4, pMAC1A, pMAC2A) zum Authentisieren des sich wiederholenden Nachrichteninhalts (RM) berechenbar ist; und
- Bereitstellen (130) der Nachrichten (B), wobei die Nachrichten (B) den sich wiederholenden Nachrichteninhalt (RM) und jeweils mindestens einen der Teilauthentifizierungscodes (pMAC1, pMAC2, pMAC3, pMAC4, pMAC1A, pMAC2A) umfassen.

2. Verfahren nach Anspruch 1, wobei
- die Teilauthentifizierungscodes (pMAC1, pMAC2, pMAC3, pMAC4, pMAC1A, pMAC2A) anhand eines zweiten Authentifizierungscodes berechnet werden;
- der zweite Authentifizierungscode anhand des sich wiederholenden Nachrichteninhalts (RM) berechnet wird.

3. Verfahren nach Anspruch 1 oder 2, wobei eine erste Länge der jeweiligen Teilauthentifizierungscodes (pMAC1, pMAC2, pMAC3, pMAC4, pMAC1A, pMAC2A) für die jeweiligen Nachrichten (B) festgelegt wird.

4. Verfahren nach einem der vorhergehenden Ansprüche, wobei eine vorgegebene Mindestlänge des ersten Authentifizierungscodes durch eine erste Anzahl der Nachrichten (B) festgelegt wird.

5. Verfahren nach einem der vorhergehenden Ansprüche, wobei eine Authentizität und/oder eine Integrität des sich wiederholenden Nachrichteninhalts (RM) der Nachrichten (B) anhand einer zweiten Anzahl der Nachrichten (B) und deren jeweiligen Teilauthentifizierungscodes (pMAC1, pMAC2, pMAC3, pMAC4, pMAC1A, pMAC2A) festgestellt wird.

6. Verfahren nach einem der vorhergehenden Ansprüche, wobei der erste Authentifizierungscode und/oder der zweite Authentifizierungscode ein Nachrichtenauthentifizierungscode und/oder ein Stream Cipher ist

7. Verfahren nach einem der vorhergehenden Ansprüche, wobei
- die Teilauthentifizierungscodes (pMAC1, pMAC2, pMAC3, pMAC4, pMAC1A, pMAC2A) Abschnitte des zweiten Authentifizierungscodes sind, und/oder
- die Teilauthentifizierungscodes (pMAC1, pMAC2, pMAC3, pMAC4, pMAC1A, pMAC2A) Abschnitte des Stream Ciphers oder eines Stream Ciphers sind.

8. Verfahren zum Authentisieren von authentisierbaren Nachrichten mit den Verfahrensschritten:
- Bestimmen (210) eines sich wiederholenden Nachrichteninhalts (RM) der Nachrichten (B);
- Ermitteln (220) von Teilauthentifizierungscodes (pMAC1, pMAC2, pMAC3, pMAC4, pMAC1A, pMAC2A) der Nachrichten (B) für den sich wiederholenden Nachrichteninhalt (RM);
- Berechnen (230) von lokalen Teilauthentifizierungscodes (pMAC1B, pMAC2B) für die Nachrichten (B) anhand des sich wiederholenden Nachrichteninhalts (RM);
- Vergleichen (240) der Teilauthentifizierungscodes (pMAC1, pMAC2, pMAC3, pMAC4, pMAC1A, pMAC2A) mit den entsprechenden lokalen Teilauthentifizierungscodes (pMAC1B, pMAC2B);
- Feststellen (250) einer Authentizität und/oder einer Integrität des sich wiederholenden Nachrichteninhalts (RM) bei einer ausreichenden Übereinstimmung der Teilauthentifizierungscodes (pMAC1, pMAC2, pMAC3, pMAC4, pMAC1A, pMAC2A) mit den entsprechenden lokalen Teilauthentifizierungscodes (pMAC1B, pMAC2B).

9. Verfahren nach Anspruch 8, wobei
- ein erster Authentifizierungscode aus zumindest einem Teil der Teilauthentifizierungscodes (pMAC1, pMAC2, pMAC3, pMAC4, pMAC1A, pMAC2A) für den sich wiederholenden Nachrichteninhalt (RM) berechnet wird;
- ein dritter Authentifizierungscode für den sich wiederholenden Nachrichteninhalt (RM) oder aus zumindest einem Teil der lokalen Teilauthentifizierungscodes (pMAC1B, pMAC2B) für den sich wiederholenden Nachrichteninhalt (RM) berechnet wird;
- beim Vergleichen der erste Authentifizierungscode mit dem dritten Authentifizierungscode verglichen wird und eine Authentizität und/oder eine Integrität des sich wiederholenden Nachrichteninhalts (RM) bei einer ausreichenden Übereinstimmung des dritten Authentifizierungscodes mit dem ersten Authentifizierungscode festgestellt wird.

10. Verfahren nach Anspruch 8 oder 9, wobei
- die Teilauthentifizierungscodes (pMAC1, pMAC2, pMAC3, pMAC4, pMAC1A, pMAC2A) anhand eines zweiten Authentifizierungscodes berechnet werden;
- der zweite Authentifizierungscode anhand des sich wiederholenden Nachrichteninhalts (RM) berechnet wird.

11. Verfahren nach einem der Ansprüche 8 - 10, wobei eine erste Länge der jeweiligen Teilauthentifizierungscodes (pMAC1, pMAC2, pMAC3, pMAC4, pMAC1A, pMAC2A) für die jeweiligen Nachrichten festgelegt wird.

12. Verfahren nach einem der Ansprüche 9 - 11, wobei eine vorgegebene Mindestlänge des ersten Authentifizierungscodes durch eine erste Anzahl der Nachrichten (B) festgelegt wird.

13. Verfahren nach einem der Ansprüche 9 - 12, wobei der erste Authentifizierungscode und/oder der zweite Authentifizierungscode und/oder der dritte Authentifizierungscode ein Nachrichtenauthentifizierungscode und/oder ein Stream Cipher ist.

14. Bereitstellungsgerät zum Bereitstellen von authentisierbaren Nachrichten aufweisend:
- ein erstes Berechnungsmodul (310) zum Bestimmen eines sich wiederholenden Nachrichteninhalts (RM) der Nachrichten (B);
- ein zweites Berechnungsmodul (320) zum Berechnen von Teilauthentifizierungscodes (pMAC1, pMAC2, pMAC3, pMAC4, pMAC1A, pMAC2A) für die Nachrichten (B) anhand des sich wiederholenden Nachrichteninhalts (RM), wobei ein erster Authentifizierungscode für zumindest einen Teil der Nachrichten (B) aus zumindest einem Teil der Teilauthentifizierungscodes (pMAC1, pMAC2, pMAC3, pMAC4, pMAC1A, pMAC2A) zum Authentisieren des sich wiederholenden Nachrichteninhalts (RM) berechenbar ist; und
- ein erstes Bereitstellungsmodul (330) zum Bereitstellen der Nachrichten (B), wobei die Nachrichten (B) den sich wiederholenden Nachrichteninhalt (RM) und jeweils mindestens einen der Teilauthentifizierungscode (pMAC1, pMAC2, pMAC3, pMAC4, pMAC1A, pMAC2A) umfassen.

15. Authentisierungsgerät (BRX1, BRX2, BRX3, BRX4) zum Authentisieren von authentisierbaren Nachrichten, aufweisend:
- ein drittes Berechnungsmodul (410) zum Bestimmen eines sich wiederholenden Nachrichteninhalts (RM) der Nachrichten (B);
- ein viertes Berechnungsmodul (420) zum Ermitteln von Teilauthentifizierungscodes (430) der Nachrichten (B) für den sich wiederholenden Nachrichteninhalt (RM);
- ein fünftes Berechnungsmodul (440) zum Berechnen von lokalen Teilauthentifizierungscodes (pMAC1B, pMAC2B) für die Nachrichten (B) anhand des sich wiederholenden Nachrichteninhalts (RM);
- ein erstes Vergleichsmodul (450) zum Vergleichen der Teilauthentifizierungscodes (pMAC1, pMAC2, pMAC3, pMAC4, pMAC1A, pMAC2A) mit den entsprechenden lokalen Teilauthentifizierungscodes (pMAC1B, pMAC2B);
- ein erstes Feststellungsmodul (460) zum Feststellen einer Authentizität und/oder einer Integrität des sich wiederholenden Nachrichteninhalts (RM) bei einer ausreichenden Übereinstimmung der Teilauthentifizierungscodes pMAC1, pMAC2, pMAC3, pMAC4, pMAC1A, pMAC2A) mit den entsprechenden lokalen Teilauthentifizierungscodes (pMAC1B, pMAC2B).

16. System zum Austausch von authentisierbaren Nachrichten, aufweisend:
- mindestens ein Bereitstellungsgerät nach Anspruch 14;
- mindestens ein Authentisierungsgerät (BRX1, BRX2, BRX3, BRX4) nach Anspruch 15.

17. Computerprogrammprodukt mit Programmbefehlen zur Durchführung des Verfahrens nach einem der Ansprüche 1 - 7 und/oder zur Durchführung des Verfahrens nach einem der Ansprüche 8 - 13.

18. Computerprogrammprodukt mit Programmbefehlen für ein Erstellungsgerät, das mittels der Programmbefehle konfiguriert wird, das Bereitstellungsgerät nach Anspruch 14 und/oder das Authentisierungsgerät nach Anspruch 15 und/oder das System nach Anspruch 16 zu erstellen.

19. Bereitstellungsvorrichtung für das Computerprogrammprodukt nach Anspruch 17 oder 18, wobei die Bereitstellungsvorrichtung das Computerprogrammprodukt speichert und/oder bereitstellt.

## Claims

1. Method for providing messages which can be authenticated, having the method steps of:
- determining (110) a repeating message content (RM) of the messages (B);
- calculating (120) partial authentication codes (pMAC1, pMAC2, pMAC3, pMAC4, pMAC1A, pMAC2A) for the messages (B) on the basis of the repeating message content (RM), wherein a first authentication code for at least some of the messages (B) can be calculated from at least some of the partial authentication codes (pMAC1, pMAC2, pMAC3, pMAC4, pMAC1A, pMAC2A) for authenticating the repeating message content (RM); and
- providing (130) the messages (B), wherein the messages (B) comprise the repeating message content (RM) and at least one of the partial authentication codes (pMAC1, pMAC2, pMAC3, pMAC4, pMAC1A, pMAC2A) in each case.

2. Method according to Claim 1, wherein
- the partial authentication codes (pMAC1, pMAC2, pMAC3, pMAC4, pMAC1A, pMAC2A) are calculated on the basis of a second authentication code;
- the second authentication code is calculated on the basis of the repeating message content (RM).

3. Method according to Claim 1 or 2, wherein a first length of the respective partial authentication codes (pMAC1, pMAC2, pMAC3, pMAC4, pMAC1A, pMAC2A) is stipulated for the respective messages (B).

4. Method according to one of the preceding claims, wherein a predefined minimum length of the first authentication code is determined by a first number of the messages (B).

5. Method according to one of the preceding claims, wherein an authenticity and/or an integrity of the repeating message content (RM) of the messages (B) is/are determined on the basis of a second number of the messages (B) and their respective partial authentication codes (pMAC1, pMAC2, pMAC3, pMAC4, pMAC1A, pMAC2A).

6. Method according to one of the preceding claims, wherein the first authentication code and/or the second authentication code is/are a message authentication code and/or a stream cipher.

7. Method according to one of the preceding claims, wherein
- the partial authentication codes (pMAC1, pMAC2, pMAC3, pMAC4, pMAC1A, pMAC2A) are sections of the second authentication code, and/or
- the partial authentication codes (pMAC1, pMAC2, pMAC3, pMAC4, pMAC1A, pMAC2A) are sections of the stream cipher or of a stream cipher.

8. Method for authenticating messages which can be authenticated, having the method steps of:
- determining (210) a repeating message content (RM) of the messages (B);
- determining (220) partial authentication codes (pMAC1, pMAC2, pMAC3, pMAC4, pMAC1A, pMAC2A) of the messages (B) for the repeating message content (RM);
- calculating (230) local partial authentication codes (pMAC1B, pMAC2B) for the messages (B) on the basis of the repeating message content (RM);
- comparing (240) the partial authentication codes (pMAC1, pMAC2, pMAC3, pMAC4, pMAC1A, pMAC2A) with the corresponding local partial authentication codes (pMAC1B, pMAC2B);
- determining (250) an authenticity and/or an integrity of the repeating message content (RM) if there is a sufficient correspondence between the partial authentication codes (pMAC1, pMAC2, pMAC3, pMAC4, pMAC1A, pMAC2A) and the corresponding local partial authentication codes (pMAC1B, pMAC2B).

9. Method according to Claim 8, wherein
- a first authentication code is calculated from at least some of the partial authentication codes (pMAC1, pMAC2, pMAC3, pMAC4, pMAC1A, pMAC2A) for the repeating message content (RM);
- a third authentication code is calculated for the repeating message content (RM) or from at least some of the local partial authentication codes (pMAC1B, pMAC2B) for the repeating message content (RM);
- during the comparison, the first authentication code is compared with the third authentication code, and an authenticity and/or an integrity of the repeating message content (RM) is/are determined if there is a sufficient correspondence between the third authentication code and the first authentication code.

10. Method according to Claim 8 or 9, wherein
- the partial authentication codes (pMAC1, pMAC2, pMAC3, pMAC4, pMAC1A, pMAC2A) are calculated on the basis of a second authentication code;
- the second authentication code is calculated on the basis of the repeating message content (RM).

11. Method according to one of Claims 8-10, wherein a first length of the respective partial authentication codes (pMAC1, pMAC2, pMAC3, pMAC4, pMAC1A, pMAC2A) is stipulated for the respective messages.

12. Method according to one of Claims 9-11, wherein a predefined minimum length of the first authentication code is determined by a first number of the messages (B).

13. Method according to one of Claims 9-12, wherein the first authentication code and/or the second authentication code and/or the third authentication code is/are a message authentication code and/or a stream cipher.

14. Provision device for providing messages which can be authenticated, having:
- a first calculation module (310) for determining a repeating message content (RM) of the messages (B);
- a second calculation module (320) for calculating partial authentication codes (pMAC1, pMAC2, pMAC3, pMAC4, pMAC1A, pMAC2A) for the messages (B) on the basis of the repeating message content (RM), wherein a first authentication code for at least some of the messages (B) can be calculated from at least some of the partial authentication codes (pMAC1, pMAC2, pMAC3, pMAC4, pMAC1A, pMAC2A) for authenticating the repeating message content (RM); and
- a first provision module (330) for providing the messages (B), wherein the messages (B) comprise the repeating message content (RM) and at least one of the partial authentication codes (pMAC1, pMAC2, pMAC3, pMAC4, pMAC1A, pMAC2A) in each case.

15. Authentication device (BRX1, BRX2, BRX3, BRX4) for authenticating messages which can be authenticated, having:
- a third calculation module (410) for determining a repeating message content (RM) of the messages (B);
- a fourth calculation module (420) for creating partial authentication codes (430) of the messages (B) for the repeating message content (RM);
- a fifth calculation module (440) for calculating local partial authentication codes (pMAC1B, pMAC2B) for the messages (B) on the basis of the repeating message content (RM);
- a first comparison module (450) for comparing the partial authentication codes (pMAC1, pMAC2, pMAC3, pMAC4, pMAC1A, pMAC2A) with the corresponding local partial authentication codes (pMAC1B, pMAC2B);
- a first determination module (460) for determining an authenticity and/or an integrity of the repeating message content (RM) if there is a sufficient correspondence between the partial authentication codes (pMAC1, pMAC2, pMAC3, pMAC4, pMAC1A, pMAC2A) and the corresponding local partial authentication codes (pMAC1B, pMAC2B).

16. System for interchanging messages which can be authenticated, having:
- at least one provision device according to Claim 14;
- at least one authentication device (BRX1, BRX2, BRX3, BRX4) according to Claim 15.

17. Computer program product having program instructions for carrying out the method according to one of Claims 1-7 and/or for carrying out the method according to one of Claims 8-13.

18. Computer program product having program instructions for a creation device which is configured, by means of the program instructions, to create the provision device according to Claim 14 and/or the authentication device according to Claim 15 and/or the system according to Claim 16.

19. Provision apparatus for the computer program product according to Claim 17 or 18, wherein the provision apparatus stores and/or provides the computer program product.

## Revendications

1. Procédé pour fournir des messages authentifiables, comportant les étapes de procédé suivantes :
- détermination (110) d'un contenu de message répétitif (RM) des messages (B) ;
- calcul (120) de codes d'authentification partielle (pMAC1, pMAC2, pMAC3, pMAC4, pMAC1A, pMAC2A) pour les messages (B) à l'aide du contenu de message répétitif (RM), un premier code d'authentification pouvant être calculé pour au moins une partie des messages (B) à partir d'au moins une partie des codes d'authentification partielle (pMAC1, pMAC2, pMAC3, pMAC4, pMAC1A, pMAC2A) pour authentifier le contenu de message répétitif (RM) ; et
- fourniture (130) des messages (B), les messages (B) comprenant le contenu de message répétitif (RM) et respectivement au moins un des codes d'authentification partielle (pMAC1, pMAC2, pMAC3, pMAC4, pMAC1A, pMAC2A).

2. Procédé selon la revendication 1,
- les codes d'authentification partielle (pMAC1, pMAC2, pMAC3, pMAC4, pMAC1A, pMAC2A) étant calculés à l'aide d'un deuxième code d'authentification ;
- le deuxième code d'authentification étant calculé à l'aide du contenu de message répétitif (RM).

3. Procédé selon la revendication 1 ou 2, une première longueur des codes d'authentification partielle respectifs (pMAC1, pMAC2, pMAC3, pMAC4, pMAC1A, pMAC2A) étant déterminée pour les messages (B) respectifs.

4. Procédé selon l'une des revendications précédentes, une longueur minimale donnée du premier code d'authentification étant déterminée par un premier nombre de messages (B).

5. Procédé selon l'une des revendications précédentes, une authenticité et/ou une intégrité du contenu de message répétitif (RM) des messages (B) étant constatée à l'aide d'un deuxième nombre de messages (B) et de leurs codes d'authentification partielle respectifs (pMAC1, pMAC2, pMAC3, pMAC4, pMAC1A, pMAC2A).

6. Procédé selon l'une des revendications précédentes, le premier code d'authentification et/ou le deuxième code d'authentification étant un code d'authentification de message et/ou un chiffrement de flux.

7. Procédé selon l'une des revendications précédentes,
- les codes d'authentification partielle (pMAC1, pMAC2, pMAC3, pMAC4, pMAC1A, pMAC2A) étant des sections du deuxième code d'authentification et/ou
- les codes d'authentification partielle (pMAC1, pMAC2, pMAC3, pMAC4, pMAC1A, pMAC2A) étant des sections du chiffrement de flux ou d'un chiffrement de flux.

8. Procédé d'authentification de messages authentifiables, comportant les étapes de procédé suivantes :
- détermination (210) d'un contenu de message répétitif (RM) des messages (B) ;
- détermination (220) de codes d'authentification partielle (pMAC1, pMAC2, pMAC3, pMAC4, pMAC1A, pMAC2A) des messages (B) pour le contenu de message répétitif (RM) ;
- calcul (230) de codes d'authentification partielle locaux (pMAC1B, pMAC2B) pour les messages (B) à l'aide du contenu de message répétitif (RM) ;
- comparaison (240) des codes d'authentification partielle (pMAC1, pMAC2, pMAC3, pMAC4, pMAC1A, pMAC2A) avec les codes d'authentification partielle locaux correspondants (pMAC1B, pMAC2B) ;
- constatation (250) d'une authenticité et/ou d'une intégrité du contenu de message répétitif (RM) en cas de coïncidence suffisante entre les codes d'authentification partielle (pMAC1, pMAC2, pMAC3, pMAC4, pMAC1A, pMAC2A) et les codes d'authentification partielle locaux correspondants (pMAC1B, pMAC2B).

9. Procédé selon la revendication 8,
- un premier code d'authentification étant calculé à partir d'au moins une partie des codes d'authentification partielle (pMAC1, pMAC2, pMAC3, pMAC4, pMAC1A, pMAC2A) pour le contenu de message répétitif (RM) ;
- un troisième code d'authentification étant calculé pour le contenu de message répétitif (RM) ou à partir d'au moins une partie des codes d'authentification partielle locaux (pMAC1B, pMAC2B) pour le contenu de message répétitif (RM) ;
- lors de la comparaison, le premier code d'authentification étant comparé avec le troisième code d'authentification et une authenticité et/ou une intégrité du contenu de message répétitif (RM) étant constatées en cas de coïncidence suffisante entre le troisième code d'authentification et le premier code d'authentification.

10. Procédé selon la revendication 8 ou 9,
- les codes d'authentification partielle (pMAC1, pMAC2, pMAC3, pMAC4, pMAC1A, pMAC2A) étant calculés à l'aide d'un deuxième code d'authentification ;
- le deuxième code d'authentification étant calculé à l'aide du contenu de message répétitif (RM).

11. Procédé selon l'une des revendications 8 - 10, une première longueur des codes d'authentification partielle respectifs (pMAC1, pMAC2, pMAC3, pMAC4, pMAC1A, pMAC2A) étant déterminée pour les messages respectifs.

12. Procédé selon l'une des revendications 9 - 11, une longueur minimale donnée du premier code d'authentification étant déterminée par un premier nombre de messages (B).

13. Procédé selon l'une des revendications 9 - 12, le premier code d'authentification et/ou le deuxième code d'authentification et/ou le troisième code d'authentification étant un code d'authentification de message et/ou un chiffrement de flux.

14. Appareil de fourniture pour fournir des messages authentifiables, comportant :
- un premier module de calcul (310) pour déterminer un contenu de message répétitif (RM) des messages (B) ;
- un deuxième module de calcul (320) pour calculer des codes d'authentification partielle (pMAC1, pMAC2, pMAC3, pMAC4, pMAC1A, pMAC2A) pour les messages (B) à l'aide du contenu de message répétitif (RM), un premier code d'authentification pouvant être calculé pour au moins une partie des messages (B) à partir d'au moins une partie des codes d'authentification partielle (pMAC1, pMAC2, pMAC3, pMAC4, pMAC1A, pMAC2A) pour authentifier le contenu de message répétitif (RM) et
- un premier module de fourniture (330) pour fournir les messages (B), les messages (B) comprenant le contenu de message répétitif (RM) et respectivement au moins un des codes d'authentification partielle (pMAC1, pMAC2, pMAC3, pMAC4, pMAC1A, pMAC2A).

15. Appareil d'authentification (BRX1, BRX2, BRX3, BRX4) pour authentifier des messages authentifiables, comportant :
- un troisième module de calcul (410) pour déterminer un contenu de message répétitif (RM) des messages (B) ;
- un quatrième module de calcul (420) pour déterminer des codes d'authentification partielle (430) des messages (B) pour le contenu de message répétitif (RM) ;
- un cinquième module de calcul (440) pour calculer des codes d'authentification partielle locaux (pMAC1B, pMAC2B) pour les messages (B) à l'aide du contenu de message répétitif (RM) ;
- un premier module de comparaison (450) pour comparer les codes d'authentification partielle (pMAC1, pMAC2, pMAC3, pMAC4, pMAC1A, pMAC2A) avec les codes d'authentification partielle locaux correspondants (pMAC1B, pMAC2B) ;
- un premier module de constatation (460) pour constater une authenticité et/ou une intégrité du contenu de message répétitif (RM) en cas de coïncidence suffisante entre les codes d'authentification partielle (pMAC1, pMAC2, pMAC3, pMAC4, pMAC1A, pMAC2A) et les codes d'authentification partielle locaux correspondants (pMAC1B, pMAC2B).

16. Système d'échange de messages authentifiables, comprenant
- au moins un appareil de fourniture selon la revendication 14 ;
- au moins un appareil d'authentification (BRX1, BRX2, BRX3, BRX4) selon la revendication 15.

17. Produit de programme informatique avec des instructions de programme pour exécuter le procédé selon l'une des revendications 1 - 7 et/ou pour exécuter le procédé selon l'une des revendications 8 - 13.

18. Produit de programme informatique avec des instructions de programme pour un appareil de création qui est configuré au moyen des instructions de programme pour créer l'appareil de fourniture selon la revendication 14 et/ou l'appareil d'authentification selon la revendication 15 et/ou le système selon la revendication 16.

19. Dispositif de fourniture pour le produit de programme informatique selon la revendication 17 ou 18, le dispositif de fourniture sauvegardant et/ou fournissant le produit de programme informatique.
